# EUROPEAN PATENT APPLICATION

(11) **EP 4 676 141 A1**
(43) Date of publication of application: **07.01.2026**
(21) Application number: 23924670.5
(22) Date of filing: 01.03.2023
(51) Int. Cl.: H04W 72/0453, H04W 36/00

(54) **SWITCHING CONFIGURATION METHOD AND APPARATUS**

(71) Applicant: Beijing Xiaomi Mobile Software Co., Ltd., Beijing 100085 (CN)
(72) Inventor: WANG, Lei, Beijing 100085 (CN); GUO, Shengxiang, Beijing 100085 (CN)
(74) Representative: Stöckeler, Ferdinand
(86) International application number: PCT/CN2023/079154
(87) International publication number: WO 2024/178700

(57) **Abstract**

Disclosed in embodiments of the present disclosure are a switching configuration method and an apparatus, applicable to the technical field of communications. The method executed by a terminal device comprises, receiving switching indication information sent by a network side device, wherein the switching indication information is used for indicating information of a target frequency band in a plurality of frequency bands, and the plurality of frequency bands are used for uplink antenna switching and respectively correspond to different switching periods; and according to the switching indication information, determining a switching period corresponding to the target frequency band as a target switching period. Therefore, a terminal device can determine a switching period corresponding to a target frequency band as a target switching period, thereby avoiding uplink antenna switching failure caused by incapability to determine a switching period.

## Description

### TECHNICAL FIELD

The disclosure relates to the field of communication technology, and in particular to a method and an apparatus for switching configuration.

### BACKGROUND

In the related art, a number of bands supported for uplink (UL) antenna switching is extended from 2 to 3 or extended from 2 to 4.

To ensure that a terminal has sufficient time for the antenna switching, a switching gap is configured. During the switching gap, the terminal does not expect a network side device (e.g., a base station) to schedule UL transmissions on relevant bands. For example, when switching occurs between a band A and a band B and the switching gap is the time required for switching between the band A and the band B, then the terminal will complete the antenna switching between the band A and the band B during the switching gap, while the network side device does not schedule the UL transmissions on the band A and the band B during the switching gap.

### SUMMARY

Embodiments of the disclosure provide a method and an apparatus for switching configuration. The terminal may determine a switching period corresponding to one target band as a target switching period, thus avoiding a failure of UL antenna switching due to the inability to determine the switching period.

In a first aspect, embodiments of the disclosure provide a method for switching configuration. The method is performed by a terminal, including: receiving switching indication information sent by a network side device, in which the switching indication information indicates information of a target band among a plurality of bands, and the plurality of bands are configured for UL antenna switching and correspond to different switching periods; and determining, based on the switching indication information, a switching period corresponding to the target band as a target switching period.

In the technical solution, the terminal receives the switching indication information sent by the network side device, in which the switching indication information indicates information of the target band among the plurality of bands, the plurality of bands are configured for the UL antenna switching and correspond to different switching periods; and determines, based on the switching indication information, the switching period corresponding to the target band as the target switching period. Thus, the terminal may determine the switching period corresponding to one target band as the target switching period, avoiding the failure of UL antenna switching due to the inability to determine the switching period.

In a second aspect, embodiments of the disclosure provide a method for switching configuration. The method is performed by a network side device, including: sending switching indication information to a terminal, in which the switching indication information indicates information of a target band among a plurality of bands, the plurality of bands are configured for UL antenna switching and correspond to different switching periods, and the switching indication information is configured for the terminal to determine, based on the switching indication information, a switching period corresponding to the target band as a target switching period.

In a third aspect, embodiments of the disclosure provide a communication device. The communication device has a function of realizing some or all of the functions of the terminal in the method described in the first aspect. For example, the functions of the communication device may have the functions in some or all embodiments in the disclosure, or may have a functions of implementing any one of the embodiments in the disclosure alone. The functions may be realized by hardware or by hardware executing corresponding software. The hardware or software includes one or more units or modules corresponding to the functions described above.

In an implementation, a structure of the communication device may include a transceiver module and a processing module. The processing module is configured to support the communication device to execute the functions in the method described above. The transceiver module is configured to support communications between the communication device and other devices. The communication device may further include a storage module coupled with the transceiver module and the processing module, which stores necessary computer programs and data for the communication device.

In an implementation, the communication device includes: a transceiver module, configured to receive switching indication information sent by a network side device, in which the switching indication information indicates information of a target band among a plurality of bands, and the plurality of bands are configured for UL antenna switching and correspond to different switching periods; and a processing module, configured to determine, based on the switching indication information, a switching period corresponding to the target band as a target switching period.

In a fourth aspect, embodiments of the disclosure provide another communication device. The communication device has a function of realizing some or all of the functions of the network side device in the method described in the second aspect. For example, the functions of the communication device may have the functions in some or all embodiments in the disclosure, or may have the functions of implementing any one of the embodiments in the disclosure alone. The functions may be realized by hardware or by hardware executing corresponding software. The hardware or software includes one or more units or modules corresponding to the functions described above.

In an implementation, a structure of the communication device may include a transceiver module and a processing module. The processing module is configured to support the communication device to execute the functions in the method described above. The transceiver module is configured to support communications between the communication device and other devices. The communication device may further include a storage module coupled with the transceiver module and the processing module, which stores necessary computer programs and data for the communication device.

In an implementation, the communication device includes: a transceiver module, configured to send switching indication information to a terminal, in which the switching indication information indicates information of a target band among a plurality of bands, the plurality of bands are configured for UL antenna switching and correspond to different switching periods, and the switching indication information is configured for the terminal to determine, based on the switching indication information, a switching period corresponding to the target band as a target switching period.

In a fifth aspect, embodiments of the disclosure provide a communication device. The communication device includes a processor. When the processor calls a computer program in a memory, the method as described in the first aspect is performed.

In a sixth aspect, embodiments of the disclosure provide a communication device. The communication device includes a processor. When the processor calls a computer program in a memory, the method as described in the second aspect is performed.

In a seventh aspect, embodiments of the disclosure provide a communication device. The communication device includes a processor and a memory. The memory is stored with a computer program; and the processor is configured to execute the computer program stored in the memory, so that the communication device performs the method as described in the first aspect.

In an eighth aspect, embodiments of the disclosure provide a communication device. The communication device includes a processor and a memory. The memory is stored with a computer program; and the processor is configured to execute the computer program stored in the memory, so that the communication device performs the method as described in the second aspect.

In a ninth aspect, embodiments of the disclosure provide a communication device. The communication device includes a processor and an interface circuit. The interface circuit is configured to receive code instructions and transmit the code instructions to the processor; and the processor is configured to run the code instructions, so that the communication device performs the method as described in the first aspect.

In a tenth aspect, embodiments of the disclosure provide a communication device. The communication device includes a processor and an interface circuit. The interface circuit is configured to receive code instructions and transmit the code instructions to the processor; and the processor is configured to run the code instructions, so that the communication device performs the method as described in the second aspect.

In an eleventh aspect, embodiments of the disclosure provide a communication system. The system includes the communication device as described in the third aspect and the communication device as described in the fourth aspect, or the system includes the communication device as described in the fifth aspect and the communication device as described in the sixth aspect, or the system includes the communication device as described in the seventh aspect and the communication device as described in the eighth aspect, or the system includes the communication device as described in the ninth aspect and the communication device as described in the tenth aspect.

In a twelfth aspect, embodiments of the disclosure provide a computer-readable storage medium. The computer-readable storage medium is configured to store instructions used by the terminal. When the instructions are executed, the terminal performs the method as described in the first aspect.

In a thirteenth aspect, embodiments of the disclosure provide a computer-readable storage medium. The computer-readable storage medium is configured to store instructions used by the network side device. When the instructions are executed, the network side device performs the method as described in the second aspect.

In a fourteenth aspect, embodiments of the disclosure provide a computer program product including a computer program. When the computer program is running on a computer, the computer is caused to perform the method as described in the first aspect.

In a fifteenth aspect, embodiments of the disclosure provide a computer program product including a computer program. When the computer program is running on a computer, the computer is caused to perform the method as described in the second aspect.

In a sixteenth aspect, embodiments of the disclosure provide a chip system. The chip system includes at least one processor and an interface, and is configured to support the terminal to perform functions involved in the first aspect, for example, to determine or process at least one of data or information involved in the above methods. In a possible design, the chip system further includes a memory. The memory is configured to save a necessary computer program and data for the terminal. The chip system may be constituted by a chip, or may include a chip and other discrete devices.

In a seventeenth aspect, embodiments of the disclosure provide a chip system. The chip system includes at least one processor and an interface, and is configured to support the network side device to perform functions involved in the second aspect, for example, to determine or process at least one of data or information involved in the above methods. In a possible design, the chip system further includes a memory. The memory is configured to save a necessary computer program and data for the network side device. The chip system may be constituted by a chip, or may include a chip and other discrete devices.

In an eighteenth aspect, embodiments of the disclosure provide a computer program. When the computer program is running on a computer, the computer is caused to perform the method as described in the first aspect.

In a nineteenth aspect, embodiments of the disclosure provide a computer program. When the computer program is running on a computer, the computer is caused to perform the method as described in the second aspect.

### BRIEF DESCRIPTION OF THE DRAWINGS

In order to explain technical solutions in the embodiments of the disclosure or the related art more clearly, the drawings needed for use in the embodiments of the disclosure or in the related art will be briefly introduced below.
FIG. 1 is a diagram illustrating an architecture of a communication system according to an embodiment of the disclosure.
FIG. 2 is a flow chart illustrating a method for switching configuration according to an embodiment of the disclosure.
FIG. 3a is a flow chart illustrating another method for switching configuration according to an embodiment of the disclosure.
FIG. 3b is a flow chart illustrating another method for switching configuration according to an embodiment of the disclosure.
FIG. 4a is a flow chart illustrating another method for switching configuration according to an embodiment of the disclosure.
FIG. 4b is a flow chart illustrating another method for switching configuration according to an embodiment of the disclosure.
FIG. 5 is a flow chart illustrating another method for switching configuration according to an embodiment of the disclosure.
FIG. 6 is a flow chart illustrating another method for switching configuration according to an embodiment of the disclosure.
FIG. 7 is a flow chart illustrating another method for switching configuration according to an embodiment of the disclosure.
FIG. 8 is a flow chart illustrating another method for switching configuration according to an embodiment of the disclosure.
FIG. 9 is a flow chart illustrating another method for switching configuration according to an embodiment of the disclosure.
FIG. 10 is a flow chart illustrating another method for switching configuration according to an embodiment of the disclosure.
FIG. 11 is a flow chart illustrating a method for capability reporting according to an embodiment of the disclosure.
FIG. 12 is a flow chart illustrating another method for switching configuration according to an embodiment of the disclosure.
FIG. 13 is a flow chart illustrating another method for switching configuration according to an embodiment of the disclosure.
FIG. 14 is a flow chart illustrating another method for capability reporting according to an embodiment of the disclosure.
FIG. 15 is a flow chart illustrating another method for switching configuration according to an embodiment of the disclosure.
FIG. 16 is a block diagram illustrating a communication apparatus according to an embodiment of the disclosure.
FIG. 17 is a block diagram illustrating a communication device according to an embodiment of the disclosure.
FIG. 18 is a block diagram illustrating a chip according to an embodiment of the disclosure.

### DETAILED DESCRIPTION

In order to better understand the method and apparatus for switching configuration in embodiments of the disclosure, a communication system to which embodiments of the disclosure are applicable is described below.

Embodiments of the disclosure are described in detail below, and examples of the embodiments are illustrated in the accompanying figures, throughout which the same or similar symbols indicate the same or similar components or components with the same or similar functions. The embodiments described below with reference to the accompanying figures are exemplary and are intended to be used to explain the disclosure and are not to be construed as a limitation of the disclosure.

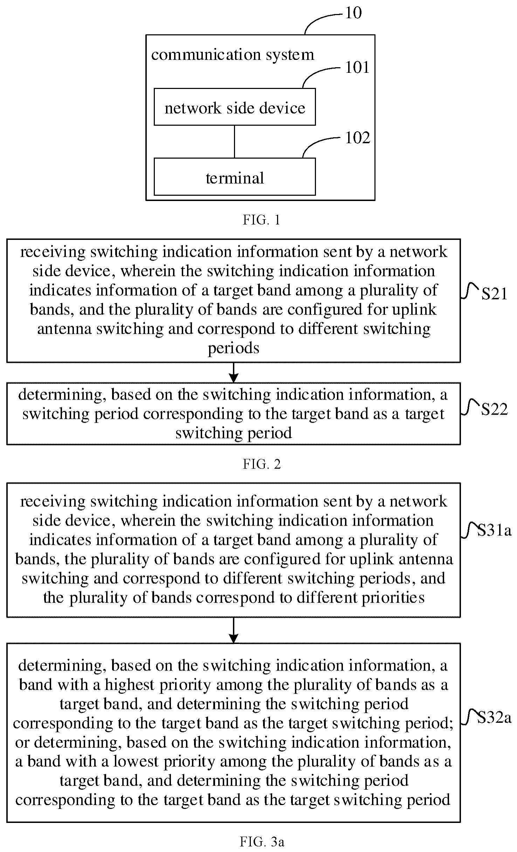

FIG. 1 is a diagram illustrating an architecture of a communication system according to an embodiment of the disclosure. The communication system may include, but is not limited to, one network side device and one terminal. The number and forms of the devices illustrated in FIG. 1 are only for example and do not constitute a limitation to the embodiments of the disclosure, and two or more network side devices and two or more terminals may be included in practical applications. The communication system as illustrated in FIG. 1 includes one network side device 101 and one terminal 102 for example.

It needs to be noted that the technical solution in the embodiments of the disclosure is applicable to various communication systems, such as a long term evolution (LTE) system, a 5th generation (5G) mobile communication system, a 5G new radio (NR) system or other future new mobile communication systems.

The network side device 101 in the embodiments of the disclosure is an entity, at a network side, for transmitting or receiving a signal. For example, the network side device 101 may be an evolved NodeB (eNB), a transmission reception point (TRP), a next generation NodeB (gNB) in a NR system, a base station in other future mobile communication systems, an access node in a wireless fidelity (WiFi) system, or the like. A specific technology and a specific device form adopted by the network side device 101 are not limited in the embodiments of the disclosure. The network side device 101 according to the embodiments of the disclosure may consist of a central unit (CU) and a distributed unit (DU). The CU may also be referred to as a control unit. The protocol layers of the network side device 101 may be split by using a structure of the CU-DU, so that the functions for a part of the protocol layers are placed in the CU for central control, and functions of a remaining part or all of the protocol layers are distributed in the DU, and the DU is centrally controlled by the CU.

The terminal 102 in the embodiments of the disclosure is an entity, at a user side, for receiving or transmitting a signal, for example, a mobile phone. The terminal may be referred to as a user equipment (UE), a mobile station (MS), a mobile terminal (MT), etc. The terminal may be a device with a communication function, such as a vehicle, a smart vehicle, a mobile phone, a wearable device, a tablet computer (Pad), a computer with a wireless transceiving function, a virtual reality (VR) terminal, an augmented reality (AR) terminal, a wireless terminal in industrial control, a wireless terminal in self-driving, a wireless terminal in a remote medical surgery, a wireless terminal in a smart grid, a wireless terminal in transportation safety, a wireless terminal in a smart home, etc. A specific technology and a specific device form adopted by the terminal are not limited in the embodiments of the disclosure.

It may be understood that the communication system described in the embodiments of the disclosure is intended to explain technical solutions of the embodiments of the disclosure more clearly, and does not constitute a limitation to the technical solutions provided by the embodiments of the disclosure. Those skilled in the art may know that, with evolution of a system architecture and emergence of a new service scenario, the technical solutions provided in the embodiments of the disclosure are also applicable to similar technical problems.

In addition, the following points are explained to facilitate understanding of the embodiments of the disclosure.

First, in embodiments of the disclosure, "indicating" may include directly indicating and indirectly indicating. When describing that certain information indicates A, it may include that the information carries A, or the information directly or indirectly indicates A, which does not necessarily mean that A is carried in the information.

The information indicated by the information is referred to as information to be indicated. In a specific implementation, there are a plurality of ways to indicate the information to be indicated, including but not limited to: directly indicating the information to be indicated, such as the information to be indicated itself or an index of the information to be indicated; or indirectly indicating the information to be indicated by indicating other information, in which an association relationship exists between the other information and the information to be indicated; or indicating only a part of the information to be indicated, while other parts of the information to be indicated are known or pre-agreed. For example, indication of specific information may also be implemented by utilizing a pre-agreed arrangement order of various information (e.g., defined by a protocol), thus reducing an indication overhead to some extent.

The information to be indicated may be sent as a whole or divided into a plurality of pieces of sub-information sent separately. Further, transmission periods and/or transmission occasions of these pieces of sub-information may be the same or different. Specific transmission methods are not limited in the disclosure. The transmission periods and/or transmission occasions of these pieces of sub-information may be predefined, for example, predefined based on a protocol.

Second, in the embodiments illustrated below, first, second, and various numerical labels (e.g., #1, #2) are merely for convenience of description, but are not intended to limit the scope of the embodiments of the disclosure. For example, in the embodiments of the disclosure, first and second may be used in the case of distinguishing types, and not used in the case of distinguishing the content of objects.

Third, "protocol" referred to in the embodiments of the disclosure may mean a standard specification in the field of communications, for example, including LTE protocols, NR protocols, WLAN protocols and related protocols applied in other communication systems, which is not limited in the disclosure.

Fourth, the term "at least one" refers to one or more, and the term "a plurality of" refers to two or more than two. The term "and/or" describes an association relationship of associated objects, indicating that there may be three types of relationships. For example, A and/or B may indicate: A exists alone, A and B exist simultaneously, or B exists alone, where A and B may be singular or plural. The character "/" generally indicates that the associated objects before and after this character are in an "or" relationship. The term "at least one" or similar expressions refer to any combination of these items, including a single item or a combination of a plurality of items. For example, at least one of a, b, and c may represent: a, b, c, a&b, a&c, b&c, or a&b&c, where a, b, and c may be single or multiple.

Fifth, the embodiments of the disclosure enumerate a plurality of implementations to provide a clear illustration of the technical solutions of the embodiments of the disclosure. Those skilled in the art may understand that the plurality of implementations provided in the embodiments of the disclosure may be performed individually, may be performed together with the methods of other implementations in the embodiments of the disclosure in combination, and may be performed individually or in combination with a number of methods in other related technologies. The embodiments of the disclosure do not limit this.

Uplink transmission switching (UL Tx switching) supported in Release 18 (Rel-18) extends a number of supported bands from 2 to 3 or from 2 to 4. In protocol versions of Release 16/17 (Rel-16/17), to ensure that the terminal has sufficient time for antenna switching, a switching gap is configured. During the switching gap, the terminal does not expect the network side device (e.g., base station) to schedule UL transmissions on relevant bands. For example, when switching occurs between a band A and a band B, and the switching gap is the time required for switching between the band A and the band B, then the terminal will complete the antenna switching between the band A and the band B during the switching gap, while the network side device does not schedule the UL transmissions on the band A and the band B during the switching gap.

The switching period may be configured per serving cell. A parameter (boolean) variable represents whether a switching period exists on a corresponding carrier (band), where TRUE indicates that the switching period exists on the carrier (band), and FALSE indicates that no switching period exists on the carrier (band).

Further, if two UL switchings are triggered in any two consecutive reference slots to cause UL transmissions on more than two bands, it is expected that a time interval between two positions in the two reference slots is not less than a minimum time (or minimum separation time), in which one of the two positions is an end position of all transmissions before a first UL switching and the other of the two positions is a start position of all transmissions after a second UL switching. The value of the minimum time is {0, 500 µs}.

In the related art, in the case that a plurality of bands for the UL antenna switching correspond to different switching periods, the terminal cannot determine a switching period corresponding to which band is used as the target switching period.

Based on the above, embodiments of the disclosure provide a method and an apparatus for switching configuration. The terminal, in response to the plurality of bands for the UL antenna switching corresponding to different switching periods, receives the switching indication information sent by the network side device, in which the switching indication information indicates information of the target band among the plurality of bands; and determines the target band based on the switching indication information, and determines the target switching period as the switching period corresponding to the target band. Thus, the terminal may determine the switching period corresponding to one target band as the target switching period, avoiding the failure of UL antenna switching due to the inability to determine the switching period.

It needs to be noted that in the method and apparatus for switching configuration provided in the disclosure, "band" may be replaced with "a carrier" or "a serving cell". In the embodiments of the disclosure, "band" is used as an example for description.

A method and an apparatus for switching configuration provided in the disclosure are described in detail below with reference to the accompanying figures.

Referring to FIG. 2, FIG. 2 is a flow chart illustrating a method for switching configuration according to an embodiment of the disclosure. As shown in FIG. 2, the method is executed by a terminal and may include but is not limited to the following steps S21 to S22.

At S21, switching indication information sent by a network side device is received, in which the switching indication information indicates information of a target band among a plurality of bands, and the plurality of bands are configured for UL antenna switching and correspond to different switching periods.

At S22, based on the switching indication information, a switching period corresponding to the target band is determined as a target switching period.

In this embodiment of the disclosure, the terminal may receive the switching indication information sent by the network side device. The switching indication information indicates the information of the target band among the plurality of bands, and the plurality of bands are configured for the UL antenna switching and correspond to different switching periods.

It may be understood that in a scenario where the UL antenna switching involves more than two bands, one of the bands may belong to different band combinations. For example, the band A belongs to a band pair {A, B} and a band pair {A, C}. For the first band pair {A,B}, a switching period may be configured on the band B; and for the second band pair {A,C}, a switching period may be configured on the band A. As such, both the band A and the band B are configured with switching periods. However, if the switching periods configured for the band A and the band B are different, in a case that the UL antenna switching occurs between the band A and the band B, the terminal cannot determine which switching period is specifically selected.

In this embodiment of the disclosure, for the above scenario, the terminal may receive the switching indication information sent by the network side device. The switching indication information indicates the information of the target band among the plurality of bands. In this case, the terminal may determine one target band based on the switching indication information.

The switching indication information indicates information of the target band among the plurality of bands. The switching indication information may indicate that a specific parameter of the target band is different from those of other bands among the plurality of bands. Thus, the terminal may determine a unique target band with a specific parameter that is different from those of other bands based on the switching indication information.

In an embodiment of the disclosure, related parameters may be reused as the specific parameter or a new parameter may be used as the specific parameter.

For example, the specific parameter may be a priority corresponding to a band. A priority corresponding to the target band is different from priorities corresponding to other bands among the plurality of bands.

For example, the priority corresponding to the target band may be the highest priority (in this case, priorities corresponding to other bands among the plurality of bands are not the highest priority), the second-highest priority (in this case, priorities corresponding to other bands are not the second-highest priority), the lowest priority (in this case, priorities corresponding to other bands are not the lowest priority), or the second-lowest priority (in this case, priorities corresponding to other bands are not the second-lowest priority), etc.

For example, the specific parameter may be a parameter representing whether a switching period exists on a band. In the case that the specific parameter of a certain band is a first value, it represents that the switching period exists on the band; conversely, in the case that the specific parameter of a certain band is not the first value, it represents that no switching period exists on the band.

For example, the specific parameter of the target band is the first value (in this case, specific parameters of other bands among the plurality of bands are not the first value).

In the embodiments of the disclosure, the switching indication information indicates the information of the target band among the plurality of bands. The switching indication information may indicate that the specific parameter of the target band is different from those of other bands among the plurality of bands. Thus, the terminal may determine a unique target band based on the specific parameter indicated by the switching indication information. In this case, the terminal may determine the switching period corresponding to the target band as the target switching period. Thus, the terminal may determine one switching period as the target switching period, avoiding the failure of UL antenna switching due to the inability to determine the switching period.

In some embodiments, the plurality of bands correspond to different priorities.

In some embodiments, determining by the terminal, based on the switching indication information, the switching period corresponding to the target band as the target switching period includes: determining, based on the switching indication information, a band with a highest priority among the plurality of bands as the target band, and determining the switching period corresponding to the target band as the target switching period; or determining, based on the switching indication information, a band with a lowest priority among the plurality of bands as the target band, and determining the switching period corresponding to the target band as the target switching period.

In an embodiment of the disclosure, the terminal receives the switching indication information sent by the network side device. The switching indication information indicates the information of the target band among the plurality of bands, and the plurality of bands correspond to different priorities.

In this case, the terminal may determine, based on the switching indication information, the band with the highest priority among the plurality of bands as the target band, and determine the switching period corresponding to the target band as the target switching period; or the terminal may determine, based on the switching indication information, the band with the lowest priority among the plurality of bands as the target band, and determine the switching period corresponding to the target band as the target switching period.

In some embodiments, the switching indication information indicates at least one of: the target band; a band with a first parameter being a specific value is the target band; switching between a first band pair among the plurality of bands, in which two bands of the first band pair correspond to different priorities; switching between a second band pair among the plurality of bands, in which only one of two bands of the second band pair has a first parameter being a specific value; a plurality of bands with first parameters being specific values correspond to different priorities; a band with a highest priority is the target band; a band with a lowest priority is the target band; a band with a highest priority among a plurality of bands with first parameters being specific values is the target band; or a band with a lowest priority among a plurality of bands with first parameters being specific values is the target band.

In an embodiment of the disclosure, the switching indication information may indicate the target band.

In an embodiment of the disclosure, the switching indication information may indicate that the band with the first parameter being the specific value is the target band.

In an embodiment of the disclosure, the switching indication information may indicate switching between the first band pair among the plurality of bands, in which two bands of the first band pair correspond to different priorities.

In an embodiment of the disclosure, the switching indication information may indicate switching between the second band pair among the plurality of bands, in which only one of the two bands of the second band pair has the first parameter being the specific value.

It may be understood that the UL antenna switching may occur between one band pair. In this case, the band pair in which the UL antenna switching occurs includes one target band with the first parameter being the specific value.

Certainly, the UL antenna switching may also occur between the plurality of band pairs. In this case, each band pair in which the UL antenna switching occurs may include one target band with the first parameter being the specific value.

In an embodiment of the disclosure, the switching indication information may indicate that the plurality of bands with the first parameters being the specific values correspond to different priorities.

In an embodiment of the disclosure, the switching indication information may indicate that the band with the highest priority is the target band.

In an embodiment of the disclosure, the switching indication information may indicate that the band with the lowest priority is the target band.

In an embodiment of the disclosure, the switching indication information may indicate that the band with the highest priority among the plurality of bands with the first parameters being the specific values is the target band.

In an embodiment of the disclosure, the switching indication information may indicate that the band with the lowest priority among the plurality of bands with the first parameters being the specific values is the target band.

It needs to be noted that in the above embodiments, the parameters in related art may be used as the first parameter or a new parameter may be used as the first parameter. Further, the first parameter is the specific value that may be a numerical value (e.g., "1"), or a symbol (e.g., "TRUE"), or other representation forms, which is not limited in the embodiments of disclosure.

It needs to be noted that the above embodiments are not exhaustive and are merely illustrative of some embodiments. The above embodiments may be implemented alone or in combination with a plurality of embodiments. The above embodiments are only illustrative and do not specifically limit the protection scope of the disclosure.

In some embodiments, the terminal receives configuration information sent by the network side device, in which the configuration information indicates priorities corresponding to the plurality of bands.

In this embodiment of the disclosure, the terminal may receive the configuration information sent by the network side device. In the case that the configuration information indicates the priorities corresponding to the plurality of bands, the priorities corresponding to the plurality of bands may be determined.

In some embodiments, the terminal receives a radio resource control (RRC) message sent by the network side device, in which the RRC message includes the configuration information.

In some embodiments, the configuration information indicates at least one of: a first list, in which the first list includes priorities corresponding to different bands; or a second list, in which the second list includes priorities corresponding to different band combinations.

**In** an embodiment of the disclosure, the configuration information may indicate the first list. The first list includes the priorities corresponding to different bands. Thus, the terminal may determine the priorities corresponding to different bands.

**In** an embodiment of the disclosure, the configuration information may indicate the second list. The second list includes the priorities corresponding to different band combinations. Thus, the terminal may determine the priorities corresponding to different band combinations and determine, in the case of determining a band combination to which a band belongs, a priority corresponding to the band.

For example, in the second list indicated by the configuration information, a band combination may be a combination formed by band pairs corresponding to the UL antenna switching; or the band combination may be a combination formed by a random number of bands; or the band combination may be a combination formed by bands corresponding to a specific feature set.

In the case that the band combination is a combination formed by bands corresponding to a specific feature set, the specific feature set may be a combination jointly formed by two bands and another two bands in the case of switching occurs from the two bands to the another two bands.

For example, the band combination includes a band #1, a band #2, a band #3, and a band #4. The UL antenna switching switches from the band #1 and the band #2, to the band #3 and the band #4; or the UL antenna switching switches from the band #1 and the band #3, to the band #2 and the band #4, etc.

In this embodiment or implementation, in the case that no contradiction exists, the steps may be independent, arbitrarily combined, or exchanged in order; optional manners or examples may be arbitrarily combined and may be arbitrarily combined with other implementations or embodiments.

By implementing embodiments of the disclosure, the terminal receives the switching indication information sent by the network side device, in which the switching indication information indicates information of the target band among the plurality of bands, the plurality of bands are configured for the UL antenna switching and correspond to different switching periods; and determines, based on the switching indication information, the switching period corresponding to the target band as the target switching period. Thus, the terminal may determine the switching period corresponding to one target band as the target switching period, avoiding the failure of UL antenna switching due to the inability to determine the switching period.

Referring to FIG. 3a, FIG. 3a is a flow chart illustrating another method for switching configuration according to an embodiment of the disclosure. As shown in FIG. 3a, the method is executed by a terminal and may include but is not limited to the following steps S31a to S32a.

At S31a, switching indication information sent by a network side device is received, in which the switching indication information indicates information of a target band among a plurality of bands, the plurality of bands are configured for UL antenna switching and correspond to different switching periods, and the plurality of bands correspond to different priorities.

At S32a, based on the switching indication information, a band with a highest priority among the plurality of bands is determined as a target band, and a switching period corresponding to the target band is determined as a target switching period is determined; or based on the switching indication information, a band with a lowest priority among the plurality of bands is determined as a target band, and the switching period corresponding to the target band is determined as the target switching period.

In this embodiment of the disclosure, in the case that the switching indication information indicates the information of the target band among the plurality of bands and the plurality of bands correspond to different priorities, the terminal may determine, based on the switching indication information, the band with the highest priority among the plurality of bands as the target band.

In this embodiment of the disclosure, in the case that the switching indication information indicates the information of the target band among the plurality of bands and the plurality of bands correspond to different priorities, the terminal may determine, based on the switching indication information, the band with the lowest priority among the plurality of bands as the target band.

For example, the plurality of bands indicated by the switching indication information include a band #1, a band #2, a band #3, and a band #4. The band #1, band #2, band #3, and band #4 correspond to different priorities, in which the band #1 corresponds to a first priority, the band #2 corresponds to a second priority, the band #3 corresponds to a third priority, and the band #4 corresponds to a fourth priority. Thus, the terminal may determine the band #1 corresponding to the first priority as the target band, or the terminal may determine the band #4 corresponding to the fourth priority as the target band.

It needs to be noted that the above examples are only illustrative and do not specifically limit the embodiments of the disclosure. The plurality of bands may also include two bands, etc.

In this embodiment or implementation, in the case that no contradiction exists, the steps may be independent, arbitrarily combined, or exchanged in order; optional manners or examples may be arbitrarily combined and may be arbitrarily combined with other implementations or embodiments.

It needs to be noted that in embodiments of the disclosure, S31a and S32a may be implemented alone or in combination with any other step in the embodiments of the disclosure, for example, in combination with S21 and S22 in the embodiments of the disclosure. The embodiments of the disclosure are not limited here.

By implementing embodiments of the disclosure, the terminal receives the switching indication information sent by the network side device, in which the switching indication information indicates information of the target band among the plurality of bands, the plurality of bands are configured for the UL antenna switching and correspond to different switching periods, and the plurality of bands correspond to different priorities. The terminal determines, based on the switching indication information, the band with the highest priority among the plurality of bands as the target band, and determines the switching period corresponding to the target band as the target switching period; or the terminal determines, based on the switching indication information, the band with the lowest priority among the plurality of bands as the target band, and determines the switching period corresponding to the target band as the target switching period. Thus, the terminal may determine the switching period corresponding to one target band as the target switching period, avoiding the failure of UL antenna switching due to the inability to determine the switching period.

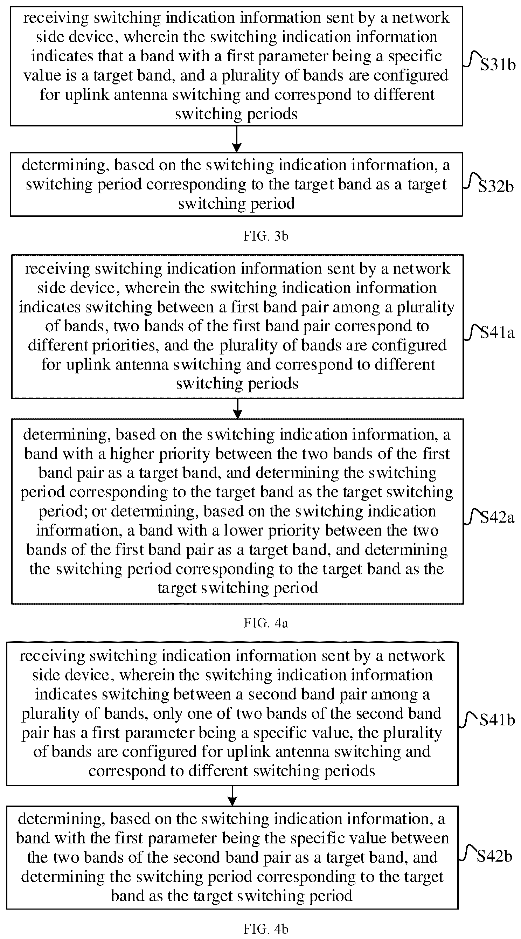

Referring to FIG. 3b, FIG. 3b is a flow chart illustrating another method for switching configuration according to an embodiment of the disclosure. As shown in FIG. 3b, the method is executed by a terminal and may include but is not limited to the following steps S31b to S32b.

At S31b, switching indication information sent by a network side device is received, in which the switching indication information indicates that a band with a first parameter being a specific value is a target band, and a plurality of bands are configured for UL antenna switching and correspond to different switching periods.

At S32b, based on the switching indication information, a switching period corresponding to the target band is determined as a target switching period.

In this embodiment of the disclosure, in the case that the switching indication information indicates that the first parameter of the target band among the plurality of bands is the specific value, the terminal may determine, based on the switching indication information, the target band with the first parameter being the specific value.

For example, the plurality of bands include a band #1, a band #2, a band #3, and a band #4. The switching indication information may indicate that a first parameter of the band #1 is the specific value, and first parameters of the band #2, the band #3, and the band #4 are not the specific value. Thus, the terminal may determine the band #1 with the first parameter being the specific value as the target band.

For example, the plurality of bands include a band #1, a band #2, and a band #3. The switching indication information may indicate that a first parameter of the band #1 is the specific value, and first parameters of the band #2 and the band #3 are not the specific value. Thus, the terminal may determine the band #1 with the first parameter being the specific value as the target band.

It needs to be noted that in the above embodiments, the parameters in related art may be used as the first parameter or a new parameter may be used as the first parameter. Further, the first parameter is the specific value that may be a numerical value (e.g., "1"), or a symbol (e.g., "TRUE"), or other representation forms, which is not limited in the embodiments of disclosure.

It needs to be noted that the above examples are only illustrative and do not specifically limit the embodiments of the disclosure. The plurality of bands may also include two bands, etc.

In this embodiment or implementation, in the case that no contradiction exists, the steps may be independent, arbitrarily combined, or exchanged in order; optional manners or examples may be arbitrarily combined and may be arbitrarily combined with other implementations or embodiments.

It needs to be noted that in embodiments of the disclosure, S31b and S32b may be implemented alone or in combination with any other step in the embodiments of the disclosure, for example, in combination with S21 and S22 in the embodiments of the disclosure. The embodiments of the disclosure are not limited here.

By implementing embodiments of the disclosure, the terminal receives the switching indication information sent by the network side device, in which the switching indication information indicates that the band with the first parameter being the specific value is the target band, and the plurality of bands are configured for the UL antenna switching and correspond to different switching periods. The terminal determines, based on the switching indication information, the switching period corresponding to the target band as the target switching period. Thus, the terminal may determine the switching period corresponding to one target band as the target switching period, avoiding the failure of UL antenna switching due to the inability to determine the switching period.

Referring to FIG. 4a, FIG. 4a is a flow chart illustrating another method for switching configuration according to an embodiment of the disclosure. As shown in FIG. 4a, the method is executed by a terminal and may include but is not limited to the following steps S41a to S42a.

At S41a, switching indication information sent by a network side device is received, in which the switching indication information indicates switching between a first band pair among a plurality of bands, two bands of the first band pair correspond to different priorities, and the plurality of bands are configured for UL antenna switching and correspond to different switching periods.

At S42a, based on the switching indication information, a band with a higher priority between the two bands of the first band pair is determined as a target band, and a switching period corresponding to the target band is determined as a target switching period; or based on the switching indication information, a band with a lower priority between the two bands of the first band pair is determined as a target band, and the switching period corresponding to the target band is determined as the target switching period.

In this embodiment of the disclosure, in the case that the switching indication information indicates switching between the first band pair among the plurality of bands and two bands of the first band pair correspond to different priorities, the terminal may determine the band with the higher priority between the two bands of the first band pair as the target band, or the terminal may determine the band with the lower priority between the two bands of the first band pair as the target band.

For example, the first band pair for the UL antenna switching includes a band #1 and a band #2. The switching indication information may indicate switching between the first band pair, in which the band #1 and the band #2 correspond to different priorities, for example, the band #1 corresponds to a first priority and the band #2 corresponds to a second priority. Thus, the terminal may determine the band #1 with the higher priority as the target band, or the terminal may determine the band #2 with the lower priority as the target band.

It needs to be noted that the above examples are only illustrative and do not specifically limit the embodiments of the disclosure. The band pair may also be other band pair, etc.

In this embodiment or implementation, in the case that no contradiction exists, the steps may be independent, arbitrarily combined, or exchanged in order; optional manners or examples may be arbitrarily combined and may be arbitrarily combined with other implementations or embodiments.

It needs to be noted that in embodiments of the disclosure, S41a and S42a may be implemented alone or in combination with any other step in the embodiments of the disclosure, for example, in combination with S21 and S22 in the embodiments of the disclosure. The embodiments of the disclosure are not limited here.

By implementing embodiments of the disclosure, the terminal receives the switching indication information sent by the network side device, in which the switching indication information indicates switching between the first band pair among the plurality of bands, two bands of the first band pair correspond to different priorities, and the plurality of bands are configured for the UL antenna switching and correspond to different switching periods. The terminal determines, based on the switching indication information, the band with the higher priority between the two bands of the first band pair as the target band, and determines the switching period corresponding to the target band as the target switching period; or the terminal determines, based on the switching indication information, the band with the lower priority between the two bands of the first band pair as the target band, and determines the switching period corresponding to the target band as the target switching period. Thus, the terminal may determine the switching period corresponding to one target band as the target switching period, avoiding the failure of UL antenna switching due to the inability to determine the switching period.

Referring to FIG. 4b, FIG. 4b is a flow chart illustrating another method for switching configuration according to an embodiment of the disclosure. As shown in FIG. 4b, the method is executed by a terminal and may include but is not limited to the following steps S41b to S42b.

At S41b, switching indication information sent by a network side device is received, in which the switching indication information indicates switching between a second band pair among a plurality of bands, only one of two bands of the second band pair has a first parameter being a specific value, the plurality of bands are configured for UL antenna switching and correspond to different switching periods.

At S42b, based on the switching indication information, a band with the first parameter being the specific value between the two bands of the second band pair is determined as a target band, and a switching period corresponding to the target band is determined as a target switching period.

In this embodiment of the disclosure, in the case that the switching indication information indicates switching between the second band pair among the plurality of bands and only one of the two bands of the second band pair has the first parameter being the specific value, the terminal may determine the band with the first parameter being the specific value between the two bands of the second band pair as the target band.

For example, the second band pair for UL antenna switching includes a band #1 and a band #2. The switching indication information may indicate switching between the second band pair, in which only one of the band #1 and the band #2 has a first parameter being the specific value, for example, the first parameter of the band #1 is the specific value. Thus, the terminal may determine the band #1 with the first parameter being the specific value as the target band.

It needs to be noted that in the above embodiments, the parameters in related art may be used as the first parameter or a new parameter may be used as the first parameter. Further, the first parameter is the specific value that may be a numerical value (e.g., "1"), or a symbol (e.g., "TRUE"), or other representation forms, which is not limited in the embodiments of disclosure.

It needs to be noted that the above examples are only illustrative and do not specifically limit the embodiments of the disclosure. The band pair may also be other band pair, etc.

In this embodiment or implementation, in the case that no contradiction exists, the steps may be independent, arbitrarily combined, or exchanged in order; optional manners or examples may be arbitrarily combined and may be arbitrarily combined with other implementations or embodiments.

It needs to be noted that in embodiments of the disclosure, S41b and S42b may be implemented alone or in combination with any other step in the embodiments of the disclosure, for example, in combination with S21 and S22 in the embodiments of the disclosure. The embodiments of the disclosure are not limited here.

By implementing embodiments of the disclosure, the terminal receives the switching indication information sent by the network side device, in which the switching indication information indicates switching between the second band pair among the plurality of bands, only one of two bands of the second band pair has the first parameter being the specific value, and the plurality of bands are configured for the UL antenna switching and correspond to different switching periods. The terminal determines, based on the switching indication information, the band with the first parameter being the specific value between the two bands of the second band pair as the target band, and determines the switching period corresponding to the target band as the target switching period. Thus, the terminal may determine the switching period corresponding to one target band as the target switching period, avoiding the failure of UL antenna switching due to the inability to determine the switching period.

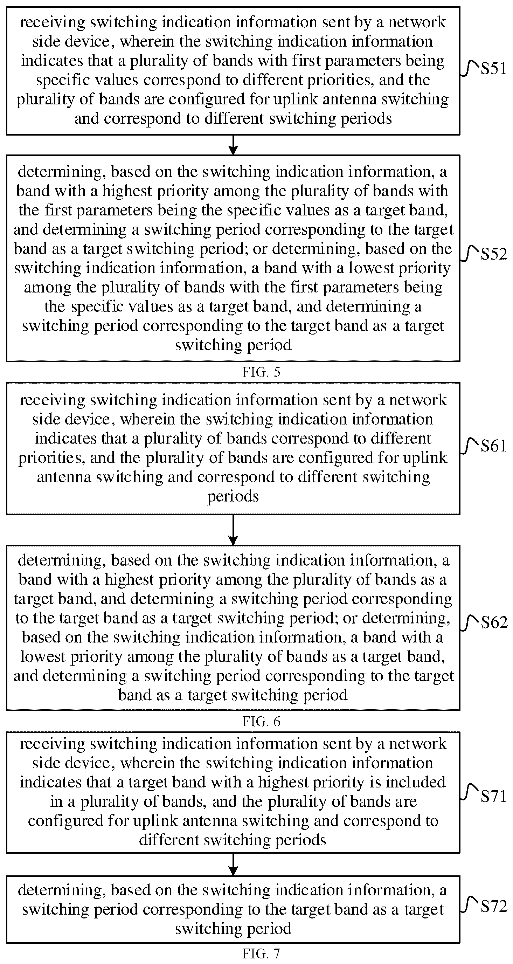

Referring to FIG. 5, FIG. 5 is a flow chart illustrating another method for switching configuration according to an embodiment of the disclosure. As shown in FIG. 5, the method is executed by a terminal and may include but is not limited to the following steps S51 to S52.

At S51, switching indication information sent by a network side device is received, in which the switching indication information indicates that a plurality of bands with first parameters being specific values correspond to different priorities, and the plurality of bands are configured for UL antenna switching and correspond to different switching periods.

At S52, based on the switching indication information, a band with a highest priority among the plurality of bands with the first parameters being the specific values is determined as a target band, and a switching period corresponding to the target band is determined as a target switching period; or based on the switching indication information, a band with a lowest priority among the plurality of bands with the first parameters being the specific values is determined as a target band, and a switching period corresponding to the target band is determined as a target switching period.

In this embodiment of the disclosure, in the case that the switching indication information indicates that the plurality of bands with the first parameters being the specific values correspond to different priorities, the terminal may determine the band with the highest priority among the plurality of bands with the first parameters being the specific values as the target band.

For example, the plurality of bands include a band #1, a band #2, a band #3, and a band #4. The switching indication information may indicate that a first parameter of the band #1, a first parameter of the band #3, and a first parameter of the band #4 are the specific values, in which a priority of the band #1 is a first-level priority, a priority of the band #3 is a second-level priority, and a priority of the band #4 is a third-level priority. Thus, the terminal may determine a band (band #1) with the highest priority among the plurality of bands (band #1, band #3, and band #4) with the first parameters being the specific values as the target band.

In this embodiment of the disclosure, in the case that the switching indication information indicates that the plurality of bands with the first parameters being the specific values correspond to different priorities, the terminal may determine the band with the lowest priority among the plurality of bands with the first parameters being the specific values as the target band.

For example, the plurality of bands include a band #1, a band #2, a band #3, and a band #4. The switching indication information may indicate that a first parameter of the band #1, a first parameter of the band #3, and a first parameter of the band #4 are the specific values, in which a priority of the band #1 is a third-level priority, a priority of the band #3 is a second-level priority, and a priority of the band #4 is a first-level priority. Thus, the terminal may determine a band (band #1) with the lowest priority among the plurality of bands (band #1, band #3, and band #4) with the first parameters being the specific values as the target band.

It needs to be noted that in the above embodiments, the parameters in related art may be used as the first parameter or a new parameter may be used as the first parameter. Further, the first parameter is the specific value that may be a numerical value (e.g., "1"), or a symbol (e.g., "TRUE"), or other representation forms, which is not limited in the embodiments of disclosure.

It needs to be noted that the above examples are only illustrative and do not specifically limit the embodiments of the disclosure. The plurality of bands may also include two bands, etc.

In this embodiment or implementation, in the case that no contradiction exists, the steps may be independent, arbitrarily combined, or exchanged in order; optional manners or examples may be arbitrarily combined and may be arbitrarily combined with other implementations or embodiments.

It needs to be noted that in embodiments of the disclosure, S51 and S52 may be implemented alone or in combination with any other step in the embodiments of the disclosure, for example, in combination with S21 and S22 in the embodiments of the disclosure. The embodiments of the disclosure are not limited here.

By implementing embodiments of the disclosure, the terminal receives the switching indication information sent by the network side device, in which the switching indication information indicates that the plurality of bands with the first parameters being the specific values correspond to different priorities, and the plurality of bands are configured for the UL antenna switching and correspond to different switching periods. The terminal determines, based on the switching indication information, the band with the highest priority among the plurality of bands with the first parameters being the specific values as the target band, and determines the switching period corresponding to the target band as the target switching period; or the terminal determines, based on the switching indication information, the band with the lowest priority among the plurality of bands with the first parameters being the specific values as the target band, and determines the switching period corresponding to the target band as the target switching period. Thus, the terminal may determine the switching period corresponding to one target band as the target switching period, avoiding the failure of UL antenna switching due to the inability to determine the switching period.

Referring to FIG. 6, FIG. 6 is a flow chart illustrating another method for switching configuration according to an embodiment of the disclosure. As shown in FIG. 6, the method is executed by a terminal and may include but is not limited to the following steps S61 to S62.

At S61, switching indication information sent by a network side device is received, in which the switching indication information indicates that a plurality of bands correspond to different priorities, and the plurality of bands are configured for UL antenna switching and correspond to different switching periods.

At S62, based on the switching indication information, a band with a highest priority among the plurality of bands is determined as a target band, and a switching period corresponding to the target band is determined as a target switching period; or based on the switching indication information, a band with a lowest priority among the plurality of bands is determined as a target band, and a switching period corresponding to the target band is determined as a target switching period..

In this embodiment of the disclosure, in the case that the plurality of bands for the UL antenna switching correspond to different switching periods, the terminal may receive the switching indication information sent by the network side device.

In this embodiment of the disclosure, in the case that the switching indication information indicates that the plurality of bands correspond to different priorities, the terminal may determine the band with the highest priority among the plurality of bands as the target band.

For example, the plurality of bands include a band #1, a band #2, a band #3, and a band #4. The switching indication information may indicate that a priority of the band #1 is a first-level priority, a priority of the band #3 is a second-level priority, and a priority of the band #4 is a third-level priority. Thus, the terminal may determine a band (band #1) with the highest priority among the plurality of bands (band #1, band #3, and band #4) as the target band.

In this embodiment of the disclosure, in the case that the switching indication information indicates that the plurality of bands correspond to different priorities, the terminal may determine the band with the lowest priority among the plurality of bands as the target band.

For example, the plurality of bands include a band #1, a band #2, a band #3, and a band #4. The switching indication information may indicate that a priority of the band #1 is a third-level priority, a priority of the band #3 is a second-level priority, and a priority of the band #4 is a first-level priority. Thus, the terminal may determine a band (band #1) with the lowest priority among the plurality of bands (band #1, band #3, and band #4) as the target band.

It needs to be noted that the above examples are only illustrative and do not specifically limit the embodiments of the disclosure. The plurality of bands may also include two bands, three bands, etc.

In this embodiment or implementation, in the case that no contradiction exists, the steps may be independent, arbitrarily combined, or exchanged in order; optional manners or examples may be arbitrarily combined and may be arbitrarily combined with other implementations or embodiments.

It needs to be noted that in embodiments of the disclosure, S61 and S62 may be implemented alone or in combination with any other step in the embodiments of the disclosure, for example, in combination with S21 and S22 in the embodiments of the disclosure. The embodiments of the disclosure are not limited here.

By implementing embodiments of the disclosure, the terminal receives the switching indication information sent by the network side device, in which the switching indication information indicates that the plurality of bands correspond to different priorities, and the plurality of bands are configured for the UL antenna switching and correspond to different switching periods. The terminal determines, based on the switching indication information, the band with the highest priority among the plurality of bands as the target band, and determines the target switching period as the switching period corresponding to the target band; or the terminal determines, based on the switching indication information, the band with the lowest priority among the plurality of bands as the target band, and determines the target switching period as the switching period corresponding to the target band. Thus, the terminal may determine the switching period corresponding to one target band as the target switching period, avoiding the failure of UL antenna switching due to the inability to determine the switching period.

Referring to FIG. 7, FIG. 7 is a flow chart illustrating another method for switching configuration according to an embodiment of the disclosure. As shown in FIG. 7, the method is executed by a terminal and may include but is not limited to the following steps S71 to S72.

At S71, switching indication information sent by a network side device is received, in which the switching indication information indicates that a target band with a highest priority is included in a plurality of bands, and the plurality of bands are configured for UL antenna switching and correspond to different switching periods.

At S72, based on the switching indication information, a switching period corresponding to the target band is determined as a target switching period.

In this embodiment of the disclosure, in the case that the switching indication information indicates that the target band with the highest priority is included in the plurality of bands, the terminal may determine the target band with the highest priority.

For example, the plurality of bands include a band #1, a band #2, a band #3, and a band #4. The switching indication information may indicate that a priority of the band #1 is a first-level priority, a priority of the band #3 is a second-level priority, and a priority of the band #4 is a second-level priority. Thus, the terminal may determine a band (band #1) with the highest priority as the target band.

It needs to be noted that the above examples are only illustrative and do not specifically limit the embodiments of the disclosure. The plurality of bands may also include two bands, three bands, etc.

In this embodiment or implementation, in the case that no contradiction exists, the steps may be independent, arbitrarily combined, or exchanged in order; optional manners or examples may be arbitrarily combined and may be arbitrarily combined with other implementations or embodiments.

It needs to be noted that in embodiments of the disclosure, S71 and S72 may be implemented alone or in combination with any other step in the embodiments of the disclosure, for example, in combination with S21 and S22 in the embodiments of the disclosure. The embodiments of the disclosure are not limited here.

By implementing embodiments of the disclosure, the terminal receives the switching indication information sent by the network side device, in which the switching indication information indicates that the target band with the highest priority is included in the plurality of bands, and the plurality of bands are configured for the UL antenna switching and correspond to different switching periods. The terminal determines, based on the switching indication information, the switching period corresponding to the target band as the target switching period. Thus, the terminal may determine the switching period corresponding to one target band as the target switching period, avoiding the failure of UL antenna switching due to the inability to determine the switching period.

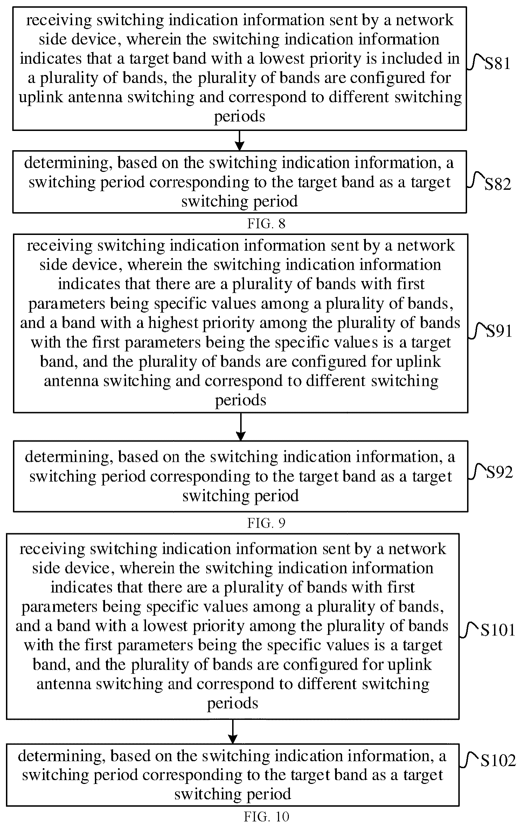

Referring to FIG. 8, FIG. 8 is a flow chart illustrating another method for switching configuration according to an embodiment of the disclosure. As shown in FIG. 8, the method is executed by a terminal and may include but is not limited to the following steps S81 to S82.

At S81, switching indication information sent by a network side device is received, in which the switching indication information indicates that a target band with a lowest priority is included in a plurality of bands, the plurality of bands are configured for UL antenna switching and correspond to different switching periods.

At S82, based on the switching indication information, a switching period corresponding to the target band is determined as a target switching period.

In this embodiment of the disclosure, in the case that the switching indication information indicates that the target band with the lowest priority is included in the plurality of bands, the terminal may determine the target band with the lowest priority.

For example, the plurality of bands include a band #1, a band #2, a band #3, and a band #4. The switching indication information may indicate that a priority of the band #1 is a second-level priority, a priority of the band #3 is a first-level priority, and a priority of the band #4 is a first-level priority. Thus, the terminal may determine a band (band #1) with the lowest priority as the target band.

It needs to be noted that the above examples are only illustrative and do not specifically limit the embodiments of the disclosure. The plurality of bands may also include two bands, three bands, etc.

In this embodiment or implementation, in the case that no contradiction exists, the steps may be independent, arbitrarily combined, or exchanged in order; optional manners or examples may be arbitrarily combined and may be arbitrarily combined with other implementations or embodiments.

It needs to be noted that in embodiments of the disclosure, S81 and S82 may be implemented alone or in combination with any other step in the embodiments of the disclosure, for example, in combination with S21 and S22 in the embodiments of the disclosure. The embodiments of the disclosure are not limited here.

By implementing embodiments of the disclosure, the terminal receives switching indication information sent by the network side device, in which the switching indication information indicates that the target band with the lowest priority is included in the plurality of bands, and the plurality of bands are configured for UL antenna switching and correspond to different switching periods. The terminal determines, based on the switching indication information, the switching period corresponding to the target band as the target switching period. Thus, the terminal may determine the switching period corresponding to one target band as the target switching period, avoiding the failure of UL antenna switching due to the inability to determine the switching period.

Referring to FIG. 9, FIG. 9 is a flow chart illustrating another method for switching configuration according to an embodiment of the disclosure. As shown in FIG. 9, the method is executed by a terminal and may include but is not limited to the following steps S91 to S92.

At S91, switching indication information sent by a network side device is received, in which the switching indication information indicates that there are a plurality of bands with first parameters being specific values among a plurality of bands, a band with a highest priority among the plurality of bands with the first parameters being the specific values is a target band, and the plurality of bands are configured for UL antenna switching and correspond to different switching periods.

At S92, based on the switching indication information, a switching period corresponding to the target band is determined as a target switching period.

In this embodiment of the disclosure, in the case that the switching indication information indicates that there are the plurality of bands with the first parameters being the specific values among the plurality of bands and the target band with the highest priority is included in the plurality of bands with the first parameters being the specific values, the terminal may determine the target band with the highest priority among the plurality of bands with the first parameters being the specific values.

For example, the plurality of bands include a band #1, a band #2, a band #3, and a band #4. The switching indication information may indicate that a first parameter of the band #1, a first parameter of the band #3, and a first parameter of the band #4 are the specific values, in which a priority of the band #1 is a first-level priority, a priority of the band #3 is a second-level priority, and a priority of the band #4 is to a second-level priority. Thus, the terminal may determine a band (band #1) with the highest priority among the plurality of bands (band #1, band #3, and band #4) with the first parameters being the specific values as the target band.

It needs to be noted that in the above embodiments, the parameters in related art may be used as the first parameter or a new parameter may be used as the first parameter. Further, the first parameter is the specific value that may be a numerical value (e.g., "1"), or a symbol (e.g., "TRUE"), or other representation forms, which is not limited in the embodiments of disclosure.

It needs to be noted that the above examples are only illustrative and do not specifically limit the embodiments of the disclosure. The plurality of bands may also include two bands, three bands, etc.

In this embodiment or implementation, in the case that no contradiction exists, the steps may be independent, arbitrarily combined, or exchanged in order; optional manners or examples may be arbitrarily combined and may be arbitrarily combined with other implementations or embodiments.

It needs to be noted that in embodiments of the disclosure, S91 and S92 may be implemented alone or in combination with any other step in the embodiments of the disclosure, for example, in combination with S21 and S22 in the embodiments of the disclosure. The embodiments of the disclosure are not limited here.

By implementing embodiments of the disclosure, the terminal receives the switching indication information sent by the network side device, in which the switching indication information indicates that there are the plurality of bands with the first parameters being the specific values among the plurality of bands, the band with the highest priority among the plurality of bands with the first parameters being the specific values is the target band, and the plurality of bands are configured for the UL antenna switching and correspond to different switching periods. The terminal determines, based on the switching indication information, the switching period corresponding to the target band as the target switching period. Thus, the terminal may determine the switching period corresponding to one target band as the target switching period, avoiding the failure of UL antenna switching due to the inability to determine the switching period.

Referring to FIG. 10, FIG. 10 is a flow chart illustrating another method for switching configuration according to an embodiment of the disclosure. As shown in FIG. 10, the method is executed by a terminal and may include but is not limited to the following steps S101 to S102.

At S101, switching indication information sent by a network side device is received, in which the switching indication information indicates that there are a plurality of bands with first parameters being specific values among a plurality of bands, a band with a lowest priority among the plurality of bands with the first parameters being the specific values is a target band, and the plurality of bands are configured for UL antenna switching and correspond to different switching periods.

At S102, based on the switching indication information, a switching period corresponding to the target band is determined as a target switching period.

In this embodiment of the disclosure, in the case that the switching indication information indicates that there are the plurality of bands with the first parameters being the specific values among the plurality of bands and that the target band with the lowest priority is included in the plurality of bands with the first parameters being the specific values, the terminal may determine the target band with the lowest priority among the plurality of bands with the first parameters being the specific values.

For example, the plurality of bands include a band #1, a band #2, a band #3, and a band #4. The switching indication information may indicate that a first parameter of the band #1, a first parameter of the band #3, and a first parameter of the band #4 are the specific values, in which a priority of the band #1 is a second-level priority, a priority of the band #3 is a first-level priority, and a priority of the band #4 is a first-level priority. Thus, the terminal may determine a band (band #1) with the lowest priority among the plurality of bands (band #1, band #3, and band #4) with the first parameters being the specific values as the target band.

It needs to be noted that in the above embodiments, the parameters in related art may be used as the first parameter or a new parameter may be used as the first parameter. Further, the first parameter is the specific value that may be a numerical value (e.g., "1"), or a symbol (e.g., "TRUE"), or other representation forms, which is not limited in the embodiments of disclosure.

It needs to be noted that the above examples are only illustrative and do not specifically limit the embodiments of the disclosure. The plurality of bands may also include two bands, three bands, etc.

In this embodiment or implementation, in the case that no contradiction exists, the steps may be independent, arbitrarily combined, or exchanged in order; optional manners or examples may be arbitrarily combined and may be arbitrarily combined with other implementations or embodiments.

It needs to be noted that in embodiments of the disclosure, S101 and S102 may be implemented alone or in combination with any other step in the embodiments of the disclosure, for example, in combination with S21 and S22 in the embodiments of the disclosure. The embodiments of the disclosure are not limited here.

By implementing embodiments of the disclosure, the terminal receives the switching indication information sent by the network side device, in which the switching indication information indicates that there are the plurality of bands with the first parameters being the specific values among the plurality of bands, the band with the lowest priority among the plurality of bands with the first parameters being the specific values is the target band, and the plurality of bands are configured for the UL antenna switching and correspond to different switching periods. The terminal determines, based on the switching indication information, the switching period corresponding to the target band as the target switching period. Thus, the terminal may determine the switching period corresponding to one target band as the target switching period, avoiding the failure of UL antenna switching due to the inability to determine the switching period.

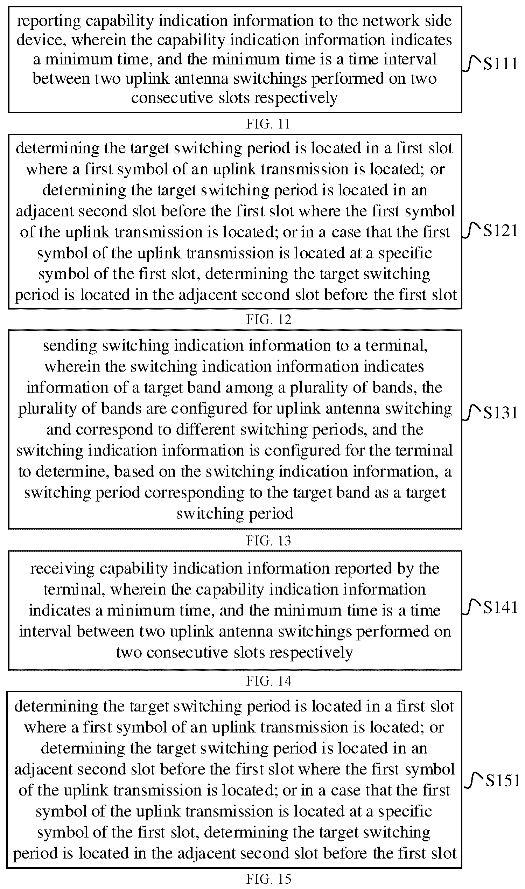

Referring to FIG. 11, FIG. 11 is a flow chart illustrating a method for capability reporting according to an embodiment of the disclosure. As shown in FIG. 11, the method is executed by a terminal and may include but is not limited to the following step S111.

At S111, capability indication information is reported to a network side device, in which the capability indication information indicates a minimum time, and the minimum time is a time interval between two UL antenna switchings performed on two consecutive slots respectively.

In this embodiment of the disclosure, the terminal supports reporting the capability indication information to the network side device. The capability indication information indicates the minimum time.

It may be understood that if two UL switchings are triggered in any two consecutive reference slots to cause UL transmissions on more than two bands, it is expected that a time interval between two positions in the two reference slots is not less than the minimum time (or minimum separation time), in which one of the two positions is an end position of all transmissions before a first UL switching and the other of the two positions is a start position of all transmissions after a second UL switching. The value of the minimum time is {0, 500 µs}.

In an embodiment of the disclosure, the terminal may report the capability indication information to the network side device based on its capability, in which the capability indication information indicates the minimum time.

In some embodiments, the capability indication information indicates at least one of: a time interval between two UL switchings, in which one of the two UL switchings occurs between a second band pair after the other of the two UL switchings occurs between a first band pair; or a time interval between two UL switchings, in which one of the two UL switchings occurs between a second band combination after the other of the two UL switchings occurs between a first band combination.

In an embodiment of the disclosure, the capability indication information indicating the minimum time may indicate the time interval between two UL switchings, in which one of the two UL switchings occurs between the second band pair after the other of the two UL switchings occurs between the first band pair.

In an embodiment of the disclosure, the capability indication information indicating the minimum time may indicate the time interval between two UL switchings, in which one of the two UL switchings occurs between the second band combination after the other of the two UL switchings occurs between the first band combination.

It may be understood that the terminal may report the capability indication information at a granularity of bands or at a granularity of band combinations.

In this embodiment or implementation, in the case that no contradiction exists, the steps may be independent, arbitrarily combined, or exchanged in order; optional manners or examples may be arbitrarily combined and may be arbitrarily combined with other implementations or embodiments.

It needs to be noted that in embodiments of the disclosure, S111 may be implemented alone or in combination with any other step in the embodiments of the disclosure, for example, in combination with S21 and S22, and/or S31a and S32a, and/or S31b and S32b, and/or S41a and S42a, and/or S41b and S42b, and/or S51 and S52, and/or S61 and S62, and/or S71 and S72, and/or S81 and S82, and/or S91 and S92, and/or S101 and S102 in the embodiments of the disclosure. The embodiments of the disclosure are not limited here.

By implementing embodiments of the disclosure, the terminal reports the capability indication information to the network side device, in which the capability indication information indicates the minimum time, and the minimum time is the time interval between two UL antenna switchings performed on two consecutive slots respectively. Thus, the terminal supports reporting the capability indication information to the network side device, in which the capability indication information indicates the minimum time.

Referring to FIG. 12, FIG. 12 is a flow chart illustrating another method for switching configuration according to an embodiment of the disclosure. As shown in FIG. 12, the method is executed by a terminal and may include but is not limited to the following step S121.

At S121, it is determined that the target switching period is located in a first slot where a first symbol of an UL transmission is located; or it is determined that the target switching period is located in an adjacent second slot before the first slot where the first symbol of the UL transmission is located; or in a case that the first symbol of the UL transmission is located at a specific symbol of the first slot, it is determined that the target switching period is located in the adjacent second slot before the first slot.

In this embodiment of the disclosure, in the case of determining the target switching period for performing the UL antenna switching, the terminal may determine that the target switching period is located in the first slot where the first symbol of the UL transmission is located.

For example, in the case that the first slot where the first symbol of the UL transmission is located is slot #1, the terminal may determine that the target switching period is located in the slot #1.

In this embodiment of the disclosure, in the case of determining the target switching period for performing the UL antenna switching, the terminal may determine that the target switching period is located in the adjacent second slot before the first slot where the first symbol of the UL transmission is located.

For example, in the case that the first slot where the first symbol of the UL transmission is located is slot #1, the terminal may determine that the target switching period is located in the adjacent second slot #2 before the slot #1.

In this embodiment of the disclosure, in the case that the target switching period for performing the UL antenna switching is determined and the first symbol of the UL transmission is located at the specific symbol of the first slot, the terminal may determine that the target switching period is located in the adjacent second slot before the first slot.

The specific symbol may be any one of: a starting symbol, a second symbol, a third symbol, a fourth symbol, a fifth symbol, a sixth symbol, a seventh symbol, an eighth symbol, a ninth symbol, a tenth symbol, an eleventh symbol, a twelfth symbol, a thirteenth symbol, or an ending symbol.

For example, in the case that the specific symbol is the starting symbol and the first symbol of the UL transmission is at the starting symbol of the first slot #1, the terminal may determine that the target switching period is located in the adjacent second slot #2 before slot #1.

For example, in the case that the specific symbol is the ending symbol and the first symbol of the UL transmission is at the ending symbol of the first slot #1, the terminal may determine that the target switching period is located in the adjacent second slot #2 before slot #1.

It needs to be noted that the above examples are only illustrative. The specific symbol may also be other symbols, which is not limited in the embodiments of the disclosure.

In this embodiment or implementation, in the case that no contradiction exists, the steps may be independent, arbitrarily combined, or exchanged in order; optional manners or examples may be arbitrarily combined and may be arbitrarily combined with other implementations or embodiments.

It needs to be noted that in embodiments of the disclosure, S121 may be implemented alone or in combination with any other step in the embodiments of the disclosure, for example, in combination with S21 and S22, and/or S31a and S32a, and/or S31b and S32b, and/or S41a and S42a, and/or S41b and S42b, and/or S51 and S52, and/or S61 and S62, and/or S71 and S72, and/or S81 and S82, and/or S91 and S92, and/or S101 and S102, and/or S111 in the embodiments of the disclosure. The embodiments of the disclosure are not limited here.

By implementing embodiments of the disclosure, the terminal determines that the target switching period is located in the first slot where the first symbol of the UL transmission is located; or the terminal determines that the target switching period is located in the adjacent second slot before the first slot where the first symbol of the UL transmission is located; or in the case that the first symbol of the UL transmission is located at the specific symbol of the first slot, the terminal determines that the target switching period is located in the adjacent second slot before the first slot. Thus, the terminal may determine the slot where the target switching period is located.

Referring to FIG. 13, FIG. 13 is a flow chart illustrating another method for switching configuration according to an embodiment of the disclosure. As shown in FIG. 13, the method is executed by a network side device and may include but is not limited to the following steps S131.

At S131, switching indication information is sent to a terminal, in which the switching indication information indicates information of a target band among a plurality of bands, the plurality of bands are configured for UL antenna switching and correspond to different switching periods, and the switching indication information is configured for the terminal to determine, based on the switching indication information, a switching period corresponding to the target band as a target switching period.

In this embodiment of the disclosure, in a case that the plurality of bands for the UL antenna switching correspond to different switching periods, the network side device may send the switching indication information to the terminal, in which the switching indication information indicates information of the target band among the plurality of bands.

It may be understood that in a scenario where the UL antenna switching involves more than two bands, one of the bands may belong to different band combinations. For example, the band A belongs to a band pair {A, B} and a band pair {A, C}. For the first band pair {A,B}, a switching period may be configured on the band B; and for the second band pair {A,C}, a switching period may be configured on the band A. As such, both the band A and the band B are configured with switching periods. However, if the switching periods configured for the band A and the band B are different, in a case that the UL antenna switching occurs between the band A and the band B, the terminal cannot determine which switching period is specifically selected.

In an embodiment of the disclosure, for the above scenario, the network side device may send the switching indication information to the terminal. The switching indication information indicates the information of the target band among the plurality of bands. In this case, the switching indication information is configured for the terminal to determine, based on the switching indication information, the switching period corresponding to the target band as the target switching period.

The switching indication information indicates information of the target band among the plurality of bands. The switching indication information may indicate that a specific parameter of the target band is different from those of other bands among the plurality of bands. Thus, the terminal may determine a unique target band with a specific parameter that is different from those of other bands based on the switching indication information.

In an embodiment of the disclosure, related parameters may be reused as the specific parameter or a new parameter may be used as the specific parameter.

For example, the specific parameter may be a priority corresponding to a band. A priority corresponding to the target band is different from priorities corresponding to other bands among the plurality of bands.

For example, the priority corresponding to the target band may be the highest priority (in this case, priorities corresponding to other bands among the plurality of bands are not the highest priority), the second-highest priority (in this case, priorities corresponding to other bands are not the second-highest priority), the lowest priority (in this case, priorities corresponding to other bands are not the lowest priority), or the second-lowest priority (in this case, priorities corresponding to other bands are not the second-lowest priority), etc.

For example, the specific parameter may be a parameter representing whether a switching period exists on a band. In the case that the specific parameter of a certain band is a first value, it represents that the switching period exists on the band; conversely, in the case that the specific parameter of a certain band is not the first value, it represents that no switching period exists on the band.

For example, the specific parameter of the target band is the first value (in this case, specific parameters of other bands among the plurality of bands are not the first value).

**In** the embodiments of the disclosure, the switching indication information indicates the information of the target band among the plurality of bands. The switching indication information may indicate that the specific parameter of the target band is different from those of other bands among the plurality of bands. Thus, the terminal may determine a unique target band based on the specific parameter indicated by the switching indication information.

In some embodiments, the plurality of bands correspond to different priorities.

In some embodiments, before sending the switching indication information to the terminal, the network side device may determine the plurality of bands corresponding to different priorities.

In an embodiment of the disclosure, the network side device may first determine the plurality of bands corresponding to different priorities, and then send the switching indication information to the terminal, in which the switching indication information indicates the information of the target band among the plurality of bands.

In some embodiments, the switching indication information indicates at least one of: the target band; a band with a first parameter being a specific value is the target band; switching between a first band pair among the plurality of bands, in which two bands of the first band pair correspond to different priorities; switching between a second band pair among the plurality of bands, in which only one of two bands of the second band pair has the first parameter being the specific value; a plurality of bands with the first parameters being the specific values correspond to different priorities; a band with a highest priority is the target band; a band with a lowest priority is the target band; a band with a highest priority among a plurality of bands with the first parameters being the specific values is the target band; or a band with a lowest priority among a plurality of bands with the first parameters being the specific values is the target band.

In an embodiment of the disclosure, the switching indication information may indicate the target band.

In an embodiment of the disclosure, the switching indication information may indicate that the band with the first parameter being the specific value is the target band.

In an embodiment of the disclosure, the switching indication information may indicate switching between the first band pair among the plurality of bands, in which two bands of the first band pair correspond to different priorities.

In an embodiment of the disclosure, the switching indication information may indicate switching between the second band pair among the plurality of bands, in which only one of the two bands of the second band pair has the first parameter being the specific value.

In an embodiment of the disclosure, the switching indication information may indicate that the plurality of bands with the first parameters being the specific values correspond to different priorities.

In an embodiment of the disclosure, the switching indication information may indicate that the band with the highest priority is the target band.

In an embodiment of the disclosure, the switching indication information may indicate that the band with the lowest priority is the target band.

In an embodiment of the disclosure, the switching indication information may indicate that the band with the highest priority among the plurality of bands with the first parameters being the specific values is the target band.

In an embodiment of the disclosure, the switching indication information may indicate that the band with the lowest priority among the plurality of bands with the first parameters being the specific values is the target band.

It needs to be noted that in the above embodiments, the parameters in related art may be used as the first parameter or a new parameter may be used as the first parameter. Further, the first parameter is the specific value that may be a numerical value (e.g., "1"), or a symbol (e.g., "TRUE"), or other representation forms, which is not limited in the embodiments of disclosure.

It needs to be noted that the above embodiments are not exhaustive and are merely illustrative of some embodiments. The above embodiments may be implemented alone or in combination with a plurality of embodiments. The above embodiments are only illustrative and do not specifically limit the protection scope of the disclosure.

In some embodiments, the network side device sends configuration information to the terminal, in which the configuration information indicates priorities corresponding to the plurality of bands.

In these embodiments of the disclosure, the network side device may send the configuration information to the terminal. In the case that the configuration information indicates the priorities corresponding to the plurality of bands, the priorities corresponding to the plurality of bands may be determined.

In some embodiments, when the network side device sends the configuration information to the terminal, an RRC message may be sent to the terminal, in which the RRC message includes the configuration information.

In some embodiments, the configuration information indicates at least one of: a first list, in which the first list includes priorities corresponding to different bands; or a second list, in which the second list includes priorities corresponding to different band combinations.

In an embodiment of the disclosure, the configuration information may indicate the first list. The first list includes the priorities corresponding to different bands. Thus, priorities corresponding to different bands may be indicated to the terminal.

In an embodiment of the disclosure, the configuration information may indicate the second list. The second list includes the priorities corresponding to different band combinations. Thus, priorities corresponding to bands belonging to different band combinations may be indicated to the terminal.

For example, in the second list indicated by the configuration information, a band combination may be a combination formed by band pairs corresponding to the UL antenna switching; or the band combination may be a combination formed by a random number of bands; or the band combination may be a combination formed by bands corresponding to a specific feature set.

In the case that the band combination is a combination formed by bands corresponding to a specific feature set, the specific feature set may be a combination jointly formed by two bands and another two bands in the case of switching occurs from the two bands to the another two bands.

For example, the band combination includes a band #1, a band #2, a band #3, and a band #4. The UL antenna switching switches from the band #1 and the band #2, to the band #3 and the band #4; or the UL antenna switching switches from the band #1 and the band #3, to the band #2 and the band #4, etc.

In some embodiments, the network side device determines that a minimum time corresponding to the terminal is a specific time, in which the minimum time is a time interval between two UL antenna switchings performed on two consecutive slots respectively.

In these embodiments of the disclosure, the network side device may determine that the minimum time corresponding to the terminal is the specific time, in which the minimum time is the time interval between two UL antenna switchings performed on two consecutive slots respectively.

The network side device may determine the specific time based on a protocol agreement or may determine the specific time based on information reported by the terminal. The embodiments of the disclosure is not limited here.

It may be understood that if two UL switchings are triggered in any two consecutive reference slots to cause the UL transmissions on more than two bands, it is expected that a time interval between two positions in the two reference slots is not less than the minimum time (or minimum separation time), in which one of the two positions is an end position of all transmissions before a first UL switching and the other of the two positions is a start position of all transmissions after a second UL switching. The value of the minimum time is {0, 500 µs}.

In an embodiment of the disclosure, the network side device may independently determine that the minimum time corresponding to the terminal is the specific time.

For example, the network side device may independently determine that the minimum time corresponding to the terminal is the specific time. The specific time may be any one of 0 µs, 100 µs, 200 µs, 500 µs, 1000 µs, etc.

In this embodiment or implementation, in the case that no contradiction exists, the steps may be independent, arbitrarily combined, or exchanged in order; optional manners or examples may be arbitrarily combined and may be arbitrarily combined with other implementations or embodiments.

By implementing embodiments of the disclosure, the network side device sends the switching indication information to the terminal, in which the switching indication information indicates the information of the target band among the plurality of bands, the plurality of bands are configured for the UL antenna switching and correspond to different switching periods, and the switching indication information is used by the terminal to determine, based on the switching indication information, the switching period corresponding to the target band as the target switching period. Thus, the network side device may instruct the terminal to determine the target band, so as to determine the switching period corresponding to one target band as the target switching period, avoiding the failure of UL antenna switching due to the inability to determine the switching period.

Referring to FIG. 14, FIG. 14 is a flow chart illustrating another method for switching configuration according to an embodiment of the disclosure. As shown in FIG. 14, the method is executed by a network side device and may include but is not limited to the following step S141.

At S141, capability indication information reported by the terminal is received, in which the capability indication information indicates a minimum time, and the minimum time is a time interval between two UL antenna switchings performed on two consecutive slots respectively.

In an embodiment of the disclosure, the network side device may receive the capability indication information reported by the terminal, in which the capability indication information indicates the minimum time.

It may be understood that if two UL switchings are triggered in any two consecutive reference slots to cause the UL transmissions on more than two bands, it is expected that a time interval between two positions in the two reference slots is not less than the minimum time (or minimum separation time), in which one of the two positions is an end position of all transmissions before a first UL switching and the other of the two positions is a start position of all transmissions after a second UL switching. The value of the minimum time is {0, 500 µs}.

In this embodiment of the disclosure, the network side device may receive the capability indication information reported by the terminal, in which the capability indication information indicates the minimum time. Thus, the network side device may determine the minimum time of the terminal based on the capability indication information reported by the terminal.

In some embodiments, the capability indication information indicates at least one of: a time interval between two UL switchings, in which one of the two UL switchings occurs between a second band pair after the other of the two UL switchings occurs between a first band pair; or a time interval between two UL switchings, in which one of the two UL switchings occurs between a second band combination after the other of the two UL switchings occurs between a first band combination.

In an embodiment of the disclosure, the capability indication information indicating the minimum time may indicate the time interval between two UL switchings, in which one of the two UL switchings occurs between the second band pair after the other of the two UL switchings occurs between the first band pair.

In an embodiment of the disclosure, the capability indication information indicating the minimum time may indicate the time interval between two UL switchings, in which one of the two UL switchings occurs between the second band combination after the other of the two UL switchings occurs between the first band combination.

It may be understood that the terminal may report the capability indication information at a granularity of bands or at a granularity of band combinations.

In this embodiment or implementation, in the case that no contradiction exists, the steps may be independent, arbitrarily combined, or exchanged in order; optional manners or examples may be arbitrarily combined and may be arbitrarily combined with other implementations or embodiments.

It needs to be noted that in embodiments of the disclosure, S141 may be implemented alone or in combination with any other step in the embodiments of the disclosure, for example, in combination with S131 in the embodiments of the disclosure. The embodiments of the disclosure are not limited here.

By implementing embodiments of the disclosure, the terminal reports the capability indication information to the network side device, in which the capability indication information indicates the minimum time, and the minimum time is the time interval between two UL antenna switchings performed on two consecutive slots respectively. Thus, the terminal supports reporting the capability indication information to the network side device, in which the capability indication information indicates the minimum time.

Referring to FIG. 15, FIG. 15 is a flow chart illustrating another method for switching configuration according to an embodiment of the disclosure. As shown in FIG. 15, the method is executed by a network side device and may include but is not limited to the following step S151.

At S151, it is determined that a target switching period is located in a first slot where a first symbol of an UL transmission is located; or it is determined that the target switching period is located in an adjacent second slot before the first slot where the first symbol of the UL transmission is located; or in a case that the first symbol of the UL transmission is located at a specific symbol of the first slot, it is determined that the target switching period is located in the adjacent second slot before the first slot.

In the embodiment of the disclosure, in the case of determining the target switching period for performing the UL antenna switching, the network side device may determine the target switching period is located in the first slot where the first symbol of the UL transmission is located.

For example, in the case that the first slot where the first symbol of the UL transmission is located is slot #1, the network side device may determine that the target switching period is located in the slot #1.

In this embodiment of the disclosure, in the case of determining the target switching period for performing the UL antenna switching, the network side device may determine that the target switching period is located in the adjacent second slot before the first slot where the first symbol of the UL transmission is located.

For example, in the case that the first slot where the first symbol of the UL transmission is located is slot #1, the network side device may determine that the target switching period is located in the adjacent second slot #2 before the slot #1.

In this embodiment of the disclosure, in the case that the target switching period for performing the UL antenna switching is determined and the first symbol of the UL transmission is located at the specific symbol of the first slot, the network side device may determine that the target switching period is located in the adjacent second slot before the first slot.

The specific symbol may be any one of: a starting symbol, a second symbol, a third symbol, a fourth symbol, a fifth symbol, a sixth symbol, a seventh symbol, an eighth symbol, a ninth symbol, a tenth symbol, an eleventh symbol, a twelfth symbol, a thirteenth symbol, or an ending symbol.

For example, in the case that the specific symbol is the starting symbol and the first symbol of the UL transmission is at the starting symbol of the first slot #1, the network side device may determine that the target switching period is located in the adjacent second slot #2 before the slot #1.

For example, in the case that the specific symbol is the ending symbol and the first symbol of the UL transmission is at the ending symbol of the first slot #1, the network side device may determine that the target switching period is located in the adjacent second slot #2 before the slot #1.

It needs to be noted that the above examples are only illustrative. The specific symbol may also be other symbols, which is not limited in the embodiments of the disclosure.

In this embodiment or implementation, in the case that no contradiction exists, the steps may be independent, arbitrarily combined, or exchanged in order; optional manners or examples may be arbitrarily combined and may be arbitrarily combined with other implementations or embodiments.

It needs to be noted that in embodiments of the disclosure, S151 may be implemented alone or in combination with any other step in the embodiments of the disclosure, for example, in combination with S132 and/or S141 in the embodiments of the disclosure. The embodiments of the disclosure are not limited here.

By implementing the embodiments of the disclosure, the network side device determines the target switching period is located in the first slot where the first symbol of the UL transmission is located; or the network side device determines the target switching period is located in the adjacent second slot before the first slot where the first symbol of the UL transmission is located; or in the case that the first symbol of the UL transmission is located at the specific symbol of the first slot, the network side device determines the target switching period is located in the adjacent second slot before the first slot. Thus, the network side device may determine the slot where the target switching period is located.

For facilitating understanding of the embodiments of the disclosure, an exemplary embodiment is provided in the embodiments of the disclosure.

In an exemplary embodiment, UL Tx switching supported in Rel-18 extends the number of supported bands from 2 to 3 or from 2 to 4. In protocol versions of Rel-16/17, to ensure that the terminal has sufficient time for antenna switching, a switching gap is configured. During the switching gap, the terminal does not expect the network side device (e.g., base station) to schedule UL transmissions on relevant bands. For example, when switching occurs between the band A and the band B, and the switching gap is N {A-B}, then the terminal will complete the antenna switching between the band A and the band B during the switching gap, and the network side device does not schedule the UL transmissions on the band A and the band B during the switching gap.

The switching period may be configured per serving cell. A parameter (boolean) variable represents whether a switching period exists on a corresponding carrier (band), where TRUE indicates that the switching period exists on the carrier (band), and FALSE indicates that no switching period exists on the carrier (band).

Further, if two UL switchings are triggered in any two consecutive reference slots to cause the UL transmissions on more than two bands, it is expected that a time interval between two positions in the two reference slots is not less than a minimum time (or minimum separation time), in which one of the two positions is an end position of all transmissions before a first UL switching and the other of the two positions is a start position of all transmissions after a second UL switching. The value of the minimum time is {0, 500 µs}.
1. How to resolve the ambiguity problem of the band where the switching period is located?

The related art meets the UL Tx switching for Rel-16/17, mainly because the number of bands supported is only 2. For the UL Tx switching for Rel-18, more than two bands are involved, one band of which may belong to different band combinations. For example, the band A belongs to a band pair {A, B} and a band pair {A, C}. For the first band pair, based on the current configuration, the switching period may be located on the band B. On the other hand, the switching period of the second band pair is configured on the band A. Thus, both the band A and the band B are configured with switching periods, and there is ambiguity on which switching period is specifically selected when performing switching between the band A and the band B.

In the embodiments of the disclosure, for a solution 1, it is ensured through a protocol predefined manner that a scheduling situation does not occur where "there are multiple bands configured with switching period location as TRUE in the bands involved in a switching".

In some embodiments, the terminal (UE) does not expect that there is more than one band configured as TRUE among bands involved in the UL antenna switching triggered by the network side device (base station).

In some embodiments, the terminal does not expect that the bands configured as TRUE have the same priority among the bands involved in the UL antenna switching triggered by the network side device.

In some embodiments, the terminal does not expect that a number of bands configured with the highest priority is greater than 1 among the bands configured as TRUE in the bands involved in the uplink antenna switching triggered by the network side device.

In some embodiments, the terminal does not expect that a number of bands configured with the highest priority is greater than 1 among the bands configured as TRUE in the bands involved in the uplink antenna switching triggered by the network side device.

In some embodiments, the terminal does not expect that a number of bands configured with the second highest priority is greater than 1 among the bands configured as TRUE in the bands involved in the uplink antenna switching triggered by the network side device.

In some embodiments, the terminal does not expect that a number of bands configured with the lowest priority is greater than 1 among the bands configured as TRUE in the bands involved in the UL antenna switching triggered by the network side device.

In some embodiments, the terminal does not expect that a number of bands configured with the second lowest priority is greater than 1 among the bands configured as TRUE in the bands involved in the UL antenna switching triggered by the network side device.

In some embodiments, the terminal does not expect that the network side device triggers the UL antenna switching between the bands with the same priority.

In some embodiments, the terminal does not expect that the network side device triggers the UL antenna switching between the bands configured as TRUE.

In some embodiments, the terminal does not expect that the number of bands with the highest priority and configured as TRUE, among the bands involved in the UL antenna switching triggered by the network side device, is greater than 1.

In some embodiments, the terminal does not expect a number of bands with the second highest priority and configured as TRUE is greater than 1 among the bands involved in the UL antenna switching triggered by the network side device.

In some embodiments, the terminal does not expect that a number of bands with the lowest priority and configured as TRUE is greater than 1 among the bands involved in the UL antenna switching triggered by the network side device.

In some embodiments, the terminal does not expect that a number of bands with the second lowest priority and configured as TRUE is greater than 1 among the bands involved in the UL antenna switching triggered by the network side device.

In some embodiments, a priority list is configured via an RRC signaling, and when configuring the priority list, configuration is performed at a granularity of band/band pair/band carrier pair.

In some embodiments, the priority list is configured via the RRC signaling, and when configuring the priority list, configuration is performed at the granularity of band combination.

In some embodiments, the priority list is configured via the RRC signaling, and when configuring the priority list, configuration is performed at the granularity of feature set (switching from ab to cd).

2. How does the terminal report the minimum separation time?

In an embodiment of the disclosure, a first terminal capability (capability indication information) is defined, and the terminal reports the first terminal capability (capability indication information) at a certain granularity.

In some embodiments, the first terminal capability (capability indication information) is defined, and the terminal reports the first terminal capability (capability indication information) at the granularity of band pair. If not reported, the minimum time is a first value (specific time) by default.

In some embodiments, the first terminal capability (capability indication information) is defined, and the terminal reports the first terminal capability (capability indication information) at the granularity of band combination. If not reported, the minimum time is the first value (specific time) by default.

In some embodiments, the first terminal capability (capability indication information) is defined, and the terminal reports the first terminal capability (capability indication information) at the granularity of feature set. If not reported, the minimum time is the first value (specific time) by default.

In some embodiments, the first terminal capability (capability indication information) is defined, and the terminal reports the first terminal capability (capability indication information). If not reported, the minimum time is the first value (specific time) by default.

In some embodiments, the first value (specific time) may be any one of 0 µs, 100 µs, 200 µs, 500 µs, or 1000 µs.

In some embodiments, the first terminal capability (capability indication information) is defined, and the terminal reports the first terminal capability (capability indication information).

In the above embodiments, the minimum time includes at least one of the following conditions.

If two UL switchings are triggered to cause two sets of UL transmissions on 3 or 4 bands with starting times that are a first time point and a second time point respectively, and the first time point is not later than the second time point, it is expected that the time interval between the first time point when all transmissions start after the first UL switching and the second time point when all transmissions start after the second UL switching is not less than the minimum time.

If two UL switchings are triggered to cause two sets of UL transmissions on 3 or 4 bands with starting times that are a first time point and a second time point respectively, and the first time point is not later than the second time point, it is expected that the time interval between the first time point when the earliest one of all transmissions starts after the first UL switching and the second time point when the earliest one of all transmissions starts after the second UL switching is not less than the minimum time.

If two UL switchings are triggered to cause two sets of UL transmissions on 3 or 4 bands with starting times that are a first time point and a second time point respectively, and the first time point is not later than the second time point, it is expected that the time interval between the first time point when the last one of all transmissions starts after the first UL switching and the second time point when the last one of all transmissions starts after the second UL switching is not less than the minimum time.

If two UL switchings are triggered to cause two sets of UL transmissions on 3 or 4 bands with starting times that are a first time point and a second time point respectively, and the first time point is not later than the second time point, it is expected that the time interval between the first time point when the earliest one of all transmissions starts after the first UL switching and the second time point when the last/latest one of all transmissions starts after the second UL switching is not less than the minimum time.

If two UL switchings are triggered to cause two sets of UL transmissions on 3 or 4 bands with starting times that are a first time point and a second time point respectively, and the first time point is not later than the second time point, it is expected that the time interval between the first time point when the last one of all transmissions starts after the first UL switching and the second time point when the earliest one of all transmissions starts after the second UL switching is not less than the minimum time.

In some embodiments, a second terminal capability is defined, and the second terminal capability represents a maximum number of aggregated antennas that may be configured in a band combination.

In some embodiments, the second terminal capability is defined, and the second terminal capability represents the maximum number of aggregated antennas that may be configured in the band combination. If not reported, the maximum number of aggregated antennas is a second value by default.

In some embodiments, if the maximum number of aggregated antennas configured by a base station for the terminal exceeds the second terminal capability of the terminal, the minimum time is the first value (specific time) by default.

In some embodiments, the network side device triggers first UL antenna switching, and the switching period is located in a slot where the starting symbol of the corresponding UL transmission is located.

In some embodiments, the network side device triggers the first UL antenna switching. If the starting symbol of the corresponding UL transmission is located at the first symbol of the slot, the switching period is located in a previous slot before the slot where the first symbol of the corresponding UL transmission is located. The first symbol includes: a starting symbol, a second symbol, a third symbol, a fourth symbol, a fifth symbol, ..., a thirteenth symbol, or an ending symbol.

In some embodiments, the network side device triggers the first UL antenna switching, and the switching period is located in a previous slot before the slot where the starting symbol of the corresponding UL transmission is located.

It may be understood that in the above exemplary embodiments, detailed descriptions of each method step have been provided in detailed descriptions of the methods of FIG. 2 to FIG. 15. For specific descriptions, reference may be made to related descriptions in the above embodiments, which will not be repeated here.

In the above embodiments provided in the disclosure, description is made to the method according to embodiments of the disclosure from the perspectives of the terminal and the network side device respectively.

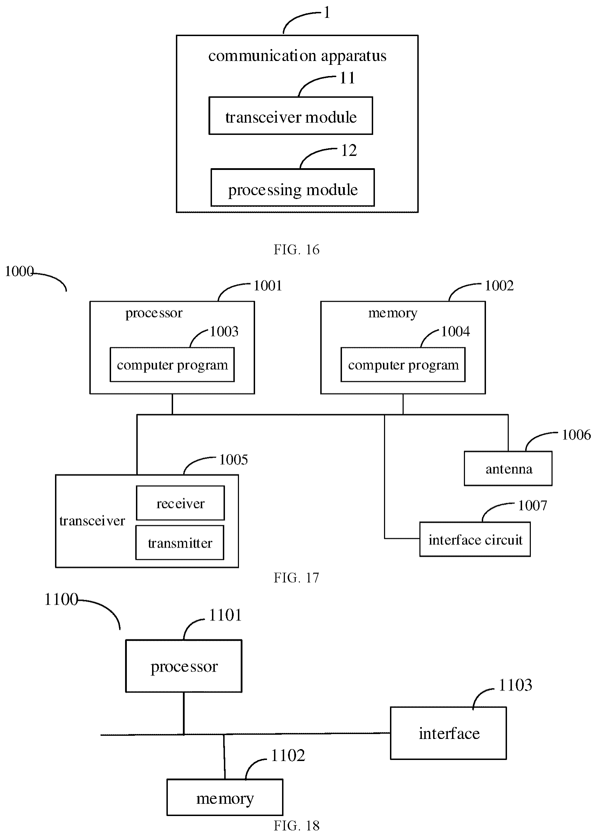

Referring to FIG. 16, FIG. 16 is a block diagram illustrating a communication apparatus 1 according to an embodiment of the disclosure. The communication apparatus 1 illustrating in FIG. 16 may include a transceiver module 11 and a processing module. The transceiver module may include a transmitting module and/or a receiving module, the transmitting module is for realizing a transmitting function, and the receiving module is for realizing a receiving function, and the transceiver module may realize the transmitting function and/or the receiving function.

The communication apparatus 1 may be a terminal, an apparatus in the terminal, or an apparatus that may be used in conjunction with the terminal. Alternatively, the communication apparatus 1 may be a network side device, an apparatus in the network side device, or an apparatus that may be used in conjunction with the network side device.

The communication apparatus 1 may be configured on the terminal side.

The communication apparatus 1 includes a transceiver module 11 and a processing module 12.

The transceiver module 11 is configured to receive switching indication information sent by a network side device, in which the switching indication information indicates information of a target band among a plurality of bands, and the plurality of bands are configured for UL antenna switching and correspond to different switching periods

The processing module 12 is configured to determine, based on the switching indication information, a switching period corresponding to the target band as a target switching period.

In some embodiments, the plurality of bands correspond to different priorities.

In some embodiments, the processing module 12 is further configured to determine, based on the switching indication information, a band with a highest priority among the plurality of bands as the target band, and determine the switching period corresponding to the target band as the target switching period; or determine, based on the switching indication information, a band with a lowest priority among the plurality of bands as the target band, and determine the switching period corresponding to the target band as the target switching period.

In some embodiments, the switching indication information indicates at least one of: the target band; a band with a first parameter being a specific value is the target band; switching between a first band pair among the plurality of bands, in which two bands of the first band pair correspond to different priorities; switching between a second band pair among the plurality of bands, in which only one of two bands of the second band pair has the first parameter being the specific value; a plurality of bands with the first parameters being the specific values correspond to different priorities; a band with a highest priority is the target band; a band with a lowest priority is the target band; a band with a highest priority among a plurality of bands with the first parameters being the specific values is the target band; or a band with a lowest priority among a plurality of bands with the first parameter being the specific value is the target band.

**In** some embodiments, in the case that the switching indication information indicates switching between the first band pair among the plurality of bands, in which two bands of the first band pair correspond to different priorities, the processing module 12 is further configured to determine, based on the switching indication information, a band with a higher priority between the two bands of the first band pair as the target band, and determine the switching period corresponding to the target band as the target switching period; or determine, based on the switching indication information, a band with a lower priority between the two bands of the first band pair as the target band, and determine the switching period corresponding to the target band as the target switching period.

In some embodiments, in the case that the switching indication information indicates switching between the second band pair among the plurality of bands, in which only one of the two bands of the second band pair has the first parameter being the specific value, the processing module 12 is further configured to determine, based on the switching indication information, a band with the first parameter being the specific value between the two bands of the second band pair as the target band, and determine the switching period corresponding to the target band as the target switching period.

In some embodiments, in the case that the switching indication information indicates that the plurality of bands with the first parameters being the specific values correspond to different priorities, the processing module 12 is further configured to determine, based on the switching indication information, a band with a highest priority among the plurality of bands with the first parameters being the specific values as the target band, and determine the switching period corresponding to the target band as the target switching period; or determine, based on the switching indication information, a band with a lowest priority among the plurality of bands with the first parameters being the specific values as the target band, and determine the switching period corresponding to the target band as the target switching period.

In some embodiments, the transceiver module 11 is further configured to receive configuration information sent by the network side device, in which the configuration information indicates priorities corresponding to the plurality of bands.

In some embodiments, the configuration information indicates at least one of: a first list, in which the first list includes priorities corresponding to different bands; or a second list, in which the second list includes priorities corresponding to different band combinations.

In some embodiments, the transceiver module 11 is further configured to report capability indication information to the network side device, in which the capability indication information indicates a minimum time, and the minimum time is a time interval between two UL antenna switchings performed on two consecutive slots respectively.

In some embodiments, the capability indication information indicates at least one of: a time interval between two UL switchings, in which one of the two UL switchings occurs between a second band pair after the other of the two UL switchings occurs between a first band pair; or a time interval between two UL switchings, in which one of the two UL switchings occurs between a second band combination after the other of the two UL switchings occurs between a first band combination.

In some embodiments, the processing module 12 is further configured to determine the target switching period is located in a first slot where a first symbol of an UL transmission is located; or determine the target switching period is located in an adjacent second slot before the first slot where the first symbol of the UL transmission is located; or in a case that the first symbol of the UL transmission is located at a specific symbol of the first slot, determine the target switching period is located in the adjacent second slot before the first slot.

The communication apparatus 1 may be configured on the network side device side.

The communication apparatus 1 includes a transceiver module 11.

The transceiver module 11 is configured to send switching indication information to a terminal, in which the switching indication information indicates information of a target band among a plurality of bands, the plurality of bands are configured for UL antenna switching and correspond to different switching periods, and the switching indication information is configured for the terminal to determine, based on the switching indication information, a switching period corresponding to the target band as a target switching period.

In some embodiments, the plurality of bands correspond to different priorities.

In some embodiments, the communication apparatus 1 further includes a processing module 12.

In some embodiments, before sending the switching indication information to the terminal, the processing module 12 is further configured to determine the plurality of bands corresponding to different priorities.

In some embodiments, the switching indication information indicates at least one of: the target band; a band with a first parameter being a specific value is the target band; switching between a first band pair among the plurality of bands, in which two bands of the first band pair correspond to different priorities; switching between a second band pair among the plurality of bands, in which only one of two bands of the second band pair has the first parameter being the specific value; a plurality of bands with the first parameters being the specific values correspond to different priorities; a band with a highest priority is the target band; a band with a lowest priority is the target band; a band with a highest priority among a plurality of bands with the first parameters being the specific values is the target band; or a band with a lowest priority among a plurality of bands with the first parameters being the specific values is the target band.

In some embodiments, the transceiver module 11 is further configured to send configuration information to the terminal, in which the configuration information indicates priorities corresponding to the plurality of bands.

In some embodiments, the configuration information indicates at least one of: a first list, in which the first list includes priorities corresponding to different bands; or a second list, in which the second list includes priorities corresponding to different band combinations.

In some embodiments, the communication apparatus 1 further includes the processing module 12.

The processing module 12 is configured to determine a minimum time corresponding to the terminal as a specific time, in which the minimum time is a time interval between two UL antenna switchings performed on two consecutive slots respectively.

In some embodiments, the transceiver module 11 is further configured to receive capability indication information reported by the terminal, in which the capability indication information indicates the minimum time, and the minimum time is a time interval between two UL antenna switchings performed on two consecutive slots respectively.

In some embodiments, the capability indication information indicates at least one of: a time interval between two UL switchings, in which one of the two UL switchings occurs between a second band pair after the other of the two UL switchings occurs between a first band pair; or a time interval between two UL switchings, in which one of the two UL switchings occurs between a second band combination after the other of the two UL switchings occurs between a first band combination.

In some embodiments, the processing module 12 is further configured to determine the target switching period is located in a first slot where a first symbol of an UL transmission is located; or determine the target switching period is located in an adjacent second slot before the first slot where the first symbol of the UL transmission is located; or in a case that the first symbol of the UL transmission is located at a specific symbol of the first slot, determine the target switching period is located in the adjacent second slot before the first slot.

Regarding the communication apparatus 1 in the above embodiments, the specific manner in which each module performs operations has been described in detail in the embodiments related to the method, which thus will not be described in detail here.

The communication apparatus 1 provided in the above embodiments of the disclosure achieves the same or similar beneficial effects as the method for switching configuration provided in some of the above embodiments, which will not be repeated here.

Referring to FIG. 17, FIG. 17 is a block diagram illustrating a communication device 1000 according to an embodiment of the disclosure. The communication device 1000 may be a terminal, a network side device, a chip, a system on chip or a processor that supports the terminal to implement the above method, or a chip, a system on chip or a processor that supports the network side device to implement the above method. The communication device 1000 may be configured to implement the method described in the method embodiments, and for details reference may be made to descriptions in the method embodiments.

The communication device 1000 may include one or more processors 1001. The processor 1001 may include a general purpose processor or a dedicated processor. For example, the processor may be a baseband processor or a central processor. The baseband processor may be configured to process a communication protocol and communication data, and the central processor may be configured to control a communication device (e.g., a network side device, a baseband chip, a terminal, a terminal chip, a DU or CU, etc.), to execute a computer program, and process data of the computer program.

Optionally, the communication device 1000 may further include one or more memories 1002 with a computer program 1004 stored. The computer program 1004 is executed so that the communication device 1000 performs the method as described in the above method embodiments. Optionally, the memory 1002 may further store data. The communication device 1000 and the memory 1002 may be independently configured or integrated together.

Optionally, the communication device 1000 may further include a transceiver 1005 and an antenna 1006. The transceiver 1005 may be referred to as a transceiving unit, a transceiver or a transceiving circuit, which may be configured to achieve a transceiving function. The transceiver 1005 may include a receiver and a transmitter. The receiver may be referred to as a receiver or a receiving circuit, etc., for implementing a receiving function; the transmitter may be referred to as a transmitter or a transmitting circuit, etc. for implementing a transmitting function.

Optionally, the communication device 1000 may further include one or more interface circuits 1007. The interface circuit 1007 is configured to receive code instructions and transmit the code instructions to the processor 1001. The processor 1001 runs the code instructions so that the communication device 1000 performs the method as described in the above method embodiments.

If the communication device 1000 is a terminal, the transceiver 1005 is configured to perform S21 in FIG. 2; S31 in FIG. 3; S41 in FIG. 4; S51 in FIG. 5; S61 in FIG. 6; S71 in FIG. 7; S81 in FIG. 8; S91 in FIG. 9; S101 in FIG. 10; or S111 in FIG. 11; and the processor 1001 is configured to perform S22 in FIG. 2; S32 in FIG. 3; S42 in FIG. 4; S52 in FIG. 5; S62 in FIG. 6; S72 in FIG. 7; S82 in FIG. 8; S92 in FIG. 9; S102 in FIG. 10; or S122 in FIG. 12.

If the communication device 1000 is a network side device, the transceiver 1005 is configured to perform S131 in FIG. 13; or S141 in FIG. 14; and the processor 1001 is configured to perform S151 in FIG. 15.

In an implementation, the processor 1001 may include a transceiver configured to implement receiving and transmitting functions. For example, the transceiver may be a transceiving circuit, or an interface, or an interface circuit. The transceiving circuit, the interface or the interface circuit configured to implement receiving and transmitting functions may be separate or integrated together. The transceiving circuit, the interface or the interface circuit may be configured to read and write codes/data, or the transceiving circuit, the interface or the interface circuit may be configured to transmit or deliver a signal.

In an implementation, the memory 1002 may be stored with a computer program 1003. The computer program 1003 is running on the processor 1001 so that the communication device 1000 performs the method as described in the above method embodiments. The computer program 1003 may be solidified in the processor 1001, in which case the processor 1001 may be implemented by hardware.

In an implementation, the communication device 1000 may include a circuit that may implement a transmitting or receiving or communication function in the above method embodiments. The processor and the transceiver described in the disclosure may be implemented on integrated circuits (ICs), analog ICs, radio frequency integrated circuits (RFICs), mixed signal ICs, application specific integrated circuits (ASICs), printed circuit boards (PCBs), electronic devices, etc. The processor and the transceiver may further be fabricated by using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe) and gallium arsenide (GaAs).

The communication device described in the above embodiments may be a terminal or a network side device, but the scope of the communication device described in the disclosure is not limited, and a structure of the communication device may not be limited by FIG. 17. The communication device may be a stand-alone device or may be a part of a larger device. For example, the communication device may be the following.
(1) a stand-alone integrated circuit (IC), or a chip, or a system on chip or a subsystem;
(2) a set of one or more ICs, optionally, which may also include a storage component for storing data and a computer program;
(3) an ASIC, such as a Modem;
(4) a module that may be embedded within other devices;
(5) a receiver, a terminal, a smart terminal device, a cellular phone, a wireless device, a handset, a mobile unit, a vehicle-mounted device, a network side device, a cloud device, an artificial intelligence device, etc.;
(6) others, and so forth.

In the case that the communication device may be a chip or a system on chip, reference may be made to FIG. 18, wherein FIG. 18 is a block diagram illustrating a chip according to an embodiment of the disclosure.

The chip 1100 includes a processor 1101 and an interface 1103. The number of processors 1101 may be one or more and the number of interfaces 1103 may be more than one.

In a case that the chip is configured to implement functions of the terminal in the embodiments of the disclosure, the interface 1103 is configured to receive code instructions and transmit the code instructions to the processor; and the processor 1101 is configured to execute the code instructions to implement the method for switching configuration according to some of the above embodiments.

In a case that the chip is configured to implement functions of the network side device in the embodiments of the disclosure, the interface 1103 is configured to receive code instructions and transmit the code instructions to the processor; and the processor 1101 is configured to execute the code instructions to implement the method for switching configuration according to some of the above embodiments.

Optionally, the chip 1100 further includes a memory 1102, configured to save necessary computer program and data.

Those skilled in the related art may understand that various illustrative logical blocks and steps listed in embodiments of the disclosure may be implemented by electronic hardware, computer software or a combination of electronic hardware and computer software. Whether the function is implemented by hardware or software depends on specific applications and design requirements for an overall system. Those skilled in the art may implement the functions by using various methods for each specific application, but such an implementation should not be understood as beyond the protection scope of embodiments of the disclosure.

An embodiment of the disclosure further provides a switching configuration system. The system includes the communication apparatus functioning as the terminal in the aforementioned embodiment of FIG. 16 and the communication apparatus functioning as the network side device in the aforementioned embodiment of FIG. 16, or the system includes the communication apparatus functioning as the terminal in the aforementioned embodiment of FIG. 17 and the communication apparatus functioning as the network side device in the aforementioned embodiment of FIG. 17.

A readable storage medium with instructions stored is further provided in the disclosure. When the instructions are executed by a computer, steps in any of the above method embodiments are implemented.

A computer program product is further provided in the disclosure. The computer program product implements functions of any of the above method embodiments when executed by a processor.

In the above embodiments, the functions may be wholly or partially implemented by software, hardware, firmware, or any combination of them. When implemented by software, the functions may be implemented in whole or in part in the form of a computer program product. The computer program product includes one or more computer programs. Procedures or functions according to embodiments of the disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another via wire (such as a coaxial cable, a fiber optic, a digital subscriber line (DSL)) or wireless (such as infrared, wireless, microwave). The computer-readable storage medium may be any available medium that may be accessed by a computer or a data storage device such as a server that integrates one or more of the available media, and a data center. The readable medium may be a magnetic medium (such as a floppy disk, a hard disk and a magnetic tape), an optical medium (such as a digital video disk (DVD)), or a semiconductor medium (such as a solid state disk (SSD)).

Those skilled in the art may understand that various numbers such as first and second involved in disclosure are distinguished merely for convenience of description, and are not intended to limit the scope of embodiments of the disclosure, but also to indicate an order of precedence.

The phase "at least one" in the disclosure may also be described as one or more, and the phase "a plurality of" may refer to two, three, four or more, which is not limited in the disclosure. In embodiments of the disclosure, for a kind of technical feature, technical features in the kind of technical feature are distinguished by "first", "second", "third", "A", "B", "C" and "D", and there is no order of precedence or magnitude between technical features described in "first", "second", "third", "A", "B", "C" and "D".

Depending on the context, the word "if" as used herein may be interpreted as "in a case that" or "when" or "in response to a determination".

Corresponding relationships indicated by tables in the disclosure may be configured or predefined. Values of information in tables are only examples, and may be configured as other values, which are not limited in the disclosure. When corresponding relationships between information and parameters are configured, it is not always necessary to configure all corresponding relationships indicated in tables. For example, in the tables in the disclosure, corresponding relationships indicated by some rows may not be configured. For another example, appropriate transformations and adjustments, such as splitting and merging, may be made based on the above tables. Names of parameters shown in headers in the tables may be other names understandable by the communication apparatus, and values or representations of the parameters may be other values or representations understandable by the communication apparatus. When the above tables are implemented, other data structures may be used, and for example, arrays, queues, containers, stacks, linear lists, pointers, linked lists, trees, graphs, structures, classes, heaps or hash tables may be used.

Predefined in the disclosure may be understood as defined, predefined, stored, pre-stored, pre-negotiated, pre-configured, solidified or pre-fired.

Those skilled in the related art may realize that, in combination with units and algorithm steps of the examples described in embodiments of the disclosure, may be implemented by electronic hardware or a combination of electronic hardware and computer software. Whether the functions are executed by hardware or software depends on a specific application and a design constraint of the technical solution. Those skilled in the art may adopt different methods for each specific application to implement the described functions, but such implementation should not be considered beyond the scope of the disclosure.

Those skilled in the art may clearly understand that, for a specific working process of a system, an apparatus and a unit described above reference may be made to a corresponding process in the above method embodiments, and details will not be repeated here.

The above are only implementations of the disclosure. However, the protection scope of the disclosure is not limited here. Changes and substitutions that may be easily considered by those skilled in the art shall be contained within the protection scope of the disclosure. Thus, the protection scope of the disclosure shall be subject to the protection scope of claims.

## Claims

1. A method for switching configuration, executed by a terminal, comprising:
receiving switching indication information sent by a network side device, wherein the switching indication information indicates information of a target band among a plurality of bands, and the plurality of bands are configured for uplink antenna switching and correspond to different switching periods; and
determining, based on the switching indication information, a switching period corresponding to the target band as a target switching period.

2. The method according to claim 1, wherein the plurality of bands correspond to different priorities.

3. The method according to claim 2, wherein determining, based on the switching indication information, the switching period corresponding to the target band as the target switching period comprises:
determining, based on the switching indication information, a band with a highest priority among the plurality of bands as the target band, and determining the switching period corresponding to the target band as the target switching period; or
determining, based on the switching indication information, a band with a lowest priority among the plurality of bands as the target band, and determining the switching period corresponding to the target band as the target switching period.

4. The method according to claim 1, wherein the switching indication information indicates at least one of:
the target band;
a band with a first parameter being a specific value is the target band;
switching between a first band pair among the plurality of bands, wherein two bands of the first band pair correspond to different priorities;
switching between a second band pair among the plurality of bands, wherein only one of two bands of the second band pair has a first parameter being a specific value;
a plurality of bands with first parameters being specific values correspond to different priorities;
a band with a highest priority is the target band;
a band with a lowest priority is the target band;
a band with a highest priority among a plurality of bands with first parameters being specific values is the target band; or
a band with a lowest priority among a plurality of bands with first parameters being specific values is the target band.

5. The method according to claim 4, wherein in the case that the switching indication information indicates switching between the first band pair among the plurality of bands, wherein two bands of the first band pair correspond to different priorities, determining, based on the switching indication information, the switching period corresponding to the target band as the target switching period comprises:
determining, based on the switching indication information, a band with a higher priority between the two bands of the first band pair as the target band, and determining the switching period corresponding to the target band as the target switching period; or
determining, based on the switching indication information, a band with a lower priority between the two bands of the first band pair as the target band, and determining the switching period corresponding to the target band as the target switching period.

6. The method according to claim 4, wherein in the case that the switching indication information indicates switching between the second band pair among the plurality of bands, wherein only one of the two bands of the second band pair has the first parameter being the specific value, determining, based on the switching indication information, the switching period corresponding to the target band as the target switching period comprises:
determining, based on the switching indication information, a band with the first parameter being the specific value between the two bands of the second band pair as the target band, and determining the switching period corresponding to the target band as the target switching period.

7. The method according to claim 4, wherein in the case that the switching indication information indicates that the plurality of bands with the first parameters being the specific values correspond to different priorities, determining, based on the switching indication information, the switching period corresponding to the target band as the target switching period comprises:
determining, based on the switching indication information, a band with a highest priority among the plurality of bands with the first parameters being the specific values as the target band, and determining the switching period corresponding to the target band as the target switching period; or
determining, based on the switching indication information, a band with a lowest priority among the plurality of bands with the first parameters being the specific values as the target band, and determining the switching period corresponding to the target band as the target switching period.

8. The method according to any one of claims 2 to 7, further comprising:
receiving configuration information sent by the network side device, wherein the configuration information indicates priorities corresponding to the plurality of bands.

9. The method according to claim 8, wherein the configuration information indicates at least one of:
a first list, wherein the first list comprises priorities corresponding to different bands; or
a second list, wherein the second list comprises priorities corresponding to different band combinations.

10. The method according to any one of claims 1 to 9, further comprising:
reporting capability indication information to the network side device, wherein the capability indication information indicates a minimum time, and the minimum time is a time interval between two uplink antenna switchings performed on two consecutive slots respectively.

11. The method according to claim 10, wherein the capability indication information indicates at least one of:
a time interval between two uplink switchings, wherein one of the two uplink switchings occurs between a second band pair after the other of the two uplink switchings occurs between a first band pair; or
a time interval between two uplink switchings, wherein one of the two uplink switchings occurs between a second band combination after the other of the two uplink switchings occurs between a first band combination.

12. The method according to any one of claims 1 to 11, further comprising:
determining that the target switching period is located in a first slot where a first symbol of an uplink transmission is located;
determining that the target switching period is located in an adjacent second slot before the first slot where the first symbol of the uplink transmission is located; or
in a case that the first symbol of the uplink transmission is located at a specific symbol of the first slot, determining that the target switching period is located in the adjacent second slot before the first slot.

13. A method for switching configuration, executed by a network side device, comprising:
sending switching indication information to a terminal, wherein the switching indication information indicates information of a target band among a plurality of bands, the plurality of bands are configured for uplink antenna switching and correspond to different switching periods, and the switching indication information is configured for the terminal to determine, based on the switching indication information, a switching period corresponding to the target band as a target switching period.

14. The method according to claim 13, wherein the plurality of bands correspond to different priorities.

15. The method according to claim 13 or 14, wherein before sending the switching indication information to the terminal, the method further comprises:
determining the plurality of bands corresponding to different priorities.

16. The method according to claim 13, wherein the switching indication information indicates at least one of:
the target band;
a band with a first parameter being a specific value is the target band;
switching between a first band pair among the plurality of bands, wherein two bands of the first band pair correspond to different priorities;
switching between a second band pair among the plurality of bands, wherein only one of two bands of the second band pair has a first parameter being a specific value;
a plurality of bands with the parameters being specific values correspond to different priorities;
a band with a highest priority is the target band;
a band with a lowest priority is the target band;
a band with a highest priority among a plurality of bands with first parameters being specific values is the target band;
a band with a lowest priority among a plurality of bands with first parameters being specific values is the target band.

17. The method according to any one of claims 14 to 16, further comprising:
sending configuration information to the terminal, wherein the configuration information indicates priorities corresponding to the plurality of bands.

18. The method according to claim 17, wherein the configuration information indicates at least one of:
a first list, wherein the first list comprises priorities corresponding to different bands; or
a second list, wherein the second list comprises priorities corresponding to different band combinations.

19. The method according to any one of claims 13 to 18, further comprising:
determining a minimum time corresponding to the terminal as a specific time, wherein the minimum time is a time interval between two uplink antenna switchings performed on two consecutive slots respectively.

20. The method according to any one of claims 13 to 18, further comprising:
receiving capability indication information reported by the terminal, wherein the capability indication information indicates the minimum time.

21. The method according to claim 20, wherein the capability indication information indicates at least one of:
a time interval between two uplink switchings, wherein one of the two uplink switchings occurs between a second band pair after the other of the two uplink switchings occurs between a first band pair; or
a time interval between two uplink switchings, wherein one of the two uplink switchings occurs between a second band combination after the other of the two uplink switchings occurs between a first band combination.

22. The method according to any one of claims 13 to 21, further comprising:
determining that the target switching period is located in a first slot where a first symbol of an uplink transmission is located;
determining that the target switching period is located in an adjacent second slot before the first slot where the first symbol of the uplink transmission is located; or
in a case that the first symbol of the uplink transmission is located at a specific symbol of the first slot, determining that the target switching period is located in the adjacent second slot before the first slot.

23. A communication apparatus, comprising:
a transceiver module, configured to receive switching indication information sent by a network side device, wherein the switching indication information indicates information of a target band among a plurality of bands, and the plurality of bands are configured for uplink antenna switching and correspond to different switching periods; and
a processing module, configured to determine, based on the switching indication information, a switching period corresponding to the target band as a target switching period.

24. A communication apparatus, comprising:
a transceiver module, configured to send switching indication information to a terminal, wherein the switching indication information indicates information of a target band among a plurality of bands, the plurality of bands are configured for uplink antenna switching and correspond to different switching periods, and the switching indication information is configured for the terminal to determine, based on the switching indication information, a switching period corresponding to the target band as a target switching period.

25. A communication device, comprising a processor and a memory storing a computer program, which, when executed by the processor, cause the communication device to implement the method according to any one of claims 1 to 12, or implement the method according to any one of claims 13 to 21.

26. A communication device, comprising: a processor and an interface circuit; wherein
the interface circuit is configured to receive code instructions and transmit the code instructions to the processor; and
the processor is configured to execute the code instructions to implement the method according to any one of claims 1 to 12, or implement the method according to any one of claims 13 to 21.

27. A computer-readable storage medium storing instructions that, when executed, the method according to any one of claims 1 to 12 or the method according to any one of claims 13 to 21 is implemented.
